(19) Europäisches Patentamt
European Patent Office
Office européen des brevets

(11) **EP 1 774 527 B1**

(12) **EUROPÄISCHE PATENTSCHRIFT**

(45) Veröffentlichungstag und Bekanntmachung des Hinweises auf die Patenterteilung:
**02.01.2008 Patentblatt 2008/01**

(21) Anmeldenummer: **05760560.2**

(22) Anmeldetag: **15.07.2005**

(51) Int Cl.:
*G11B 27/28* (2006.01)     *G11B 27/031* (2006.01)
*G06F 17/30* (2006.01)     *G10L 11/02* (2006.01)
*G10H 1/00* (2006.01)

(86) Internationale Anmeldenummer:
**PCT/EP2005/007749**

(87) Internationale Veröffentlichungsnummer:
**WO 2006/034741 (06.04.2006 Gazette 2006/14)**

(54) **VORRICHTUNG UND VERFAHREN ZUM BEZEICHNEN VON VERSCHIEDENEN SEGMENTKLASSEN**

DEVICE AND METHOD FOR LABELING DIFFERENT SEGMENT CLASSES

DISPOSITIF ET PROCEDE POUR DESIGNER DIFFERENTES CLASSES DE SEGMENT

(84) Benannte Vertragsstaaten:
**AT BE BG CH CY CZ DE DK EE ES FI FR GB GR HU IE IS IT LI LT LU LV MC NL PL PT RO SE SI SK TR**

(30) Priorität: **28.09.2004   DE 102004047032**

(43) Veröffentlichungstag der Anmeldung:
**18.04.2007   Patentblatt 2007/16**

(73) Patentinhaber: **Fraunhofer-Gesellschaft zur Förderung der angewandten Forschung e.V.**
**80686 München (DE)**

(72) Erfinder:
• **VAN PINXTEREN, Markus**
  **80469 München (DE)**
• **SAUPE, Michael**
  **98693 Ilmenau (DE)**
• **CREMER, Markus**
  **Berkeley, CA 94707 (US)**

(74) Vertreter: **Zinkler, Franz et al**
**Schoppe, Zimmermann, Stöckeler & Zinkler**
**Postfach 246**
**82043 Pullach bei München (DE)**

(56) Entgegenhaltungen:
**WO-A-20/04049188         US-A1- 2003 161 396**
**US-B1- 6 225 546**

• **COOPER M ET AL: "Summarizing popular music via structural similarity analysis" APPLICATIONS OF SIGNAL PROCESSING TO AUDIO AND ACOUSTICS, 2003 IEEE WORKSHOP ON. NEW PALTZ, NY, USA OCT,. 19-22, 2003, PISCATAWAY, NJ, USA, IEEE, 19. Oktober 2003 (2003-10-19), Seiten 127-130, XP010696469 ISBN: 0-7803-7850-4 in der Anmeldung erwähnt**
• **PATENT ABSTRACTS OF JAPAN Bd. 2003, Nr. 12, 5. Dezember 2003 (2003-12-05) & JP 2004 205575 A (NIPPON TELEGR & TELEPH CORP <NTT>; DIGITAL ART CREATION:KK), 22. Juli 2004 (2004-07-22)**
• **LOGAN B ET AL: "Music summarization using key phrases" ACOUSTICS, SPEECH, AND SIGNAL PROCESSING, 2000. ICASSP '00. PROCEEDINGS. 2000 IEEE INTERNATIONAL CONFERENCE ON 5-9 JUNE 2000, PISCATAWAY, NJ, USA, IEEE, Bd. 2, 5. Juni 2000 (2000-06-05), Seiten 749-752, XP010504831 ISBN: 0-7803-6293-4 in der Anmeldung erwähnt**
• **BARTSCH M A ET AL: "To catch a chorus: using chroma-based representations for audio thumbnailing" APPLICATIONIS OF SIGNAL PROCESSING TO AUDIO AND ACOUSTICS, 2001 IEEE WORKSHOP ON THE OCT. 21-24, 2001, PISCATAWAY, NJ, USA, IEEE, 21. Oktober 2001 (2001-10-21), Seiten 15-18, XP010566863 ISBN: 0-7803-7126-7 in der Anmeldung erwähnt**

- MUYUAN WANG ET AL: "Repeating pattern discovery from acoustic musical signals" 2004 IEEE INTERNATIONAL CONFERENCE ON MULTIMEDIA AND EXPO (ICME) (IEEE CAT. NO. 04TH8763) IEEE PISCATAWAY, NJ, USA, Bd. 3, 27. Juni 2004 (2004-06-27), Seiten 2019-2022, XP009052794 ISBN: 0-7803-8603-5

- WEI CHAI ET AL: "Structural analysis of musical signals for indexing and thumbnailing" PROCEEDINGS 2003 JOINT CONFERENCE ON DIGITAL LIBRARIES IEEE COMPUT. SOC PISCATAWAY, NJ, USA, 27. Mai 2003 (2003-05-27), Seiten 27-34, XP009052509 ISBN: 0-7695-1939-3

## Beschreibung

Die vorliegende Erfindung bezieht sich auf die Audiosegmentierung und insbesondere auf die Analyse von Musikstücken auf die in den Musikstücken enthaltenen einzelnen Hauptteile, die in dem Musikstück wiederholt auftreten können.

Die vorliegende Erfindung bezieht sich auf die Audiosegmentierung und insbesondere auf die Analyse von Musikstücken auf die in den Musikstücken enthaltenen einzelnen Hauptteile, die in dem Musikstück wiederholt auftreten können.

Musik aus dem Rock- und Popbereich besteht meistens aus mehr oder weniger eindeutigen Segmenten, wie beispielsweise Intro, Strophe, Refrain, Bridge, Outro, etc. Die Anfangs- und Endzeitpunkte solcher Segmente zu detektieren und die Segmente nach ihrer Zugehörigkeit zu den wichtigsten Klassen (Strophe und Refrain) zu gruppieren, ist Ziel der Audiosegmentierung. Eine korrekte Segmentierung und auch Kennzeichnung der berechneten Segmente kann in verschiedenen Bereichen sinnvoll eingesetzt werden. Beispielsweise können so Musikstücke von Online-Anbietern, wie Amazon, Musicline, etc. intelligent "angespielt" werden.

Die meisten Anbieter im Internet beschränken sich bei ihren Hörbeispielen auf einen kurzen Ausschnitt aus den angebotenen Musikstücken. In diesem Fall wäre es natürlich auch sinnvoll, dem Interessenten nicht nur die ersten 30 Sekunden oder beliebige 30 Sekunden, sondern einen möglichst repräsentativen Ausschnitt aus dem Lied anzubieten. Dies könnte z. B. der Refrain sein, oder aber auch eine Zusammenfassung des Liedes, bestehend aus Segmenten, die den verschiedenen Hauptklassen (Strophe, Refrain, ...) angehören.

Ein weiteres Anwendungsbeispiel für die Technik der Audiosegmentierung ist das Integrieren des Segmentierungs-/Gruppierungs-/Markierungsalgorithmus in einen Musicplayer. Die Informationen über Segmentanfänge und Segmentenden ermöglichen das gezielte Navigieren durch ein Musikstück. Durch die Klassenzugehörigkeit der Segmente, also ob ein Segment eine Strophe, ein Refrain, etc. ist, kann z. B. auch direkt zum nächsten Refrain oder zur nächsten Strophe gesprungen werden. Eine derartige Anwendung ist für große Musikmärkte von Interesse, die ihren Kunden die Möglichkeit bieten, in komplette Alben hinein zu hören. Dadurch erspart sich der Kunde das lästige, suchende Vorspulen zu charakteristischen Stellen im Lied, die ihn vielleicht dazu bewegen könnten, ein Musikstück am Ende tatsächlich zu kaufen.

Auf dem Gebiet der Audiosegmentierung existieren verschiedene Ansätze. Nachfolgend wird der Ansatz von Jonathan Foote und Matthew Cooper beispielhaft dargestellt. Dieses Verfahren ist in FOOTE, J.T. / Cooper, M.L.: Summarizing Popular Music via Structural Similarity Analysis. Proceedings of the IEEE Workshop of Signal Processing to Audio and Acoustics 2003. FOOTE, J.T. / COOPER, M.L.: Media Segmentation using Self-Similar Decomposition. Proceedings of SPIE Storage and Retrieval for Multimedia Databases, Bd. 5021, S. 167-75, Januar 2003, dargestellt.

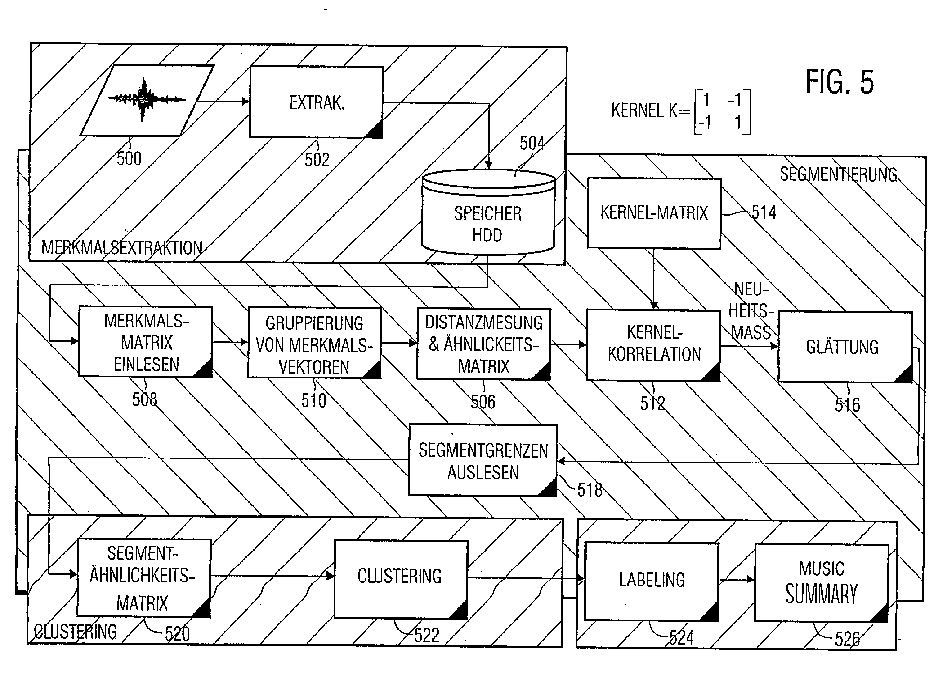

Das bekannte Verfahren von Foote wird anhand des Blockschaltbilds von Fig. 5 beispielhaft erläutert. Zunächst wird eine WAV-Datei 500 bereitgestellt. In einem nachgeschalteten Extraktionsblock 502 findet dann eine Merkmalsextraktion statt, wobei als Merkmal die Spektralkoeffizienten an sich oder alternativ die Mel-Frequenz-Cepstral-Koeffizienten (MFCCs) extrahiert werden. Vor dieser Extraktion wird eine Kurzzeit-Fourier-Transformation (STFT) mit 0,05 Sekunden breiten nicht-überlappenden Fenstern mit der WAV-Datei durchgeführt. Die MFCC-Merkmale werden dann im Spektralbereich extrahiert. Hierbei sei darauf hingewiesen, dass die Parametrisierung nicht für eine Kompression, Übertragung oder Rekonstruktion optimiert ist, sondern für eine Audioanalyse. Die Anforderung besteht dahingehend, dass ähnliche Audiostücke ähnliche Merkmale erzeugen.

Die extrahierten Merkmale werden dann in einem Speicher 504 abgelegt.

Auf den Merkmalsextraktionsalgorithmus findet nunmehr ein Segmentierungsalgorithmus statt, der in einer Ähnlichkeitsmatrix endet, wie es in einem Block 506 dargestellt ist. Zunächst wird jedoch die Merkmalsmatrix eingelesen (508), um dann Merkmalsvektoren zu gruppieren (510), um dann auf Grund der gruppierten Merkmalsvektoren eine Ähnlichkeitsmatrix aufzubauen, die aus einer Distanzmessung zwischen jeweils allen Merkmalen besteht. Im Einzelnen werden alle paarweisen Kombinationen von Audiofenstern unter Verwendung eines quantitativen Ähnlichkeitsmaßes, also der Distanz, verglichen.

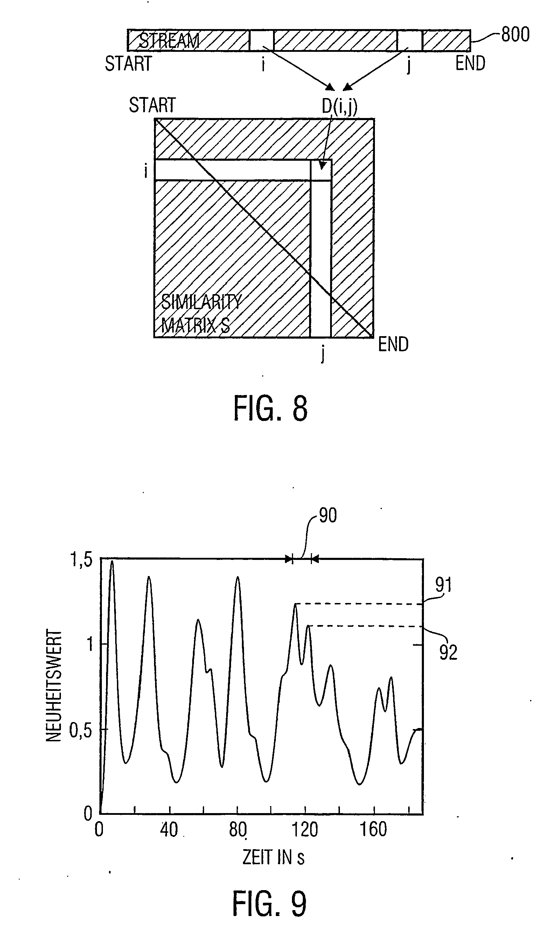

Der Aufbau der Ähnlichkeitsmatrix ist in Fig. 8 dargestellt. So ist in Fig. 8 das Musikstück als Strom oder Stream 800 von Audioabtastwerten dargestellt. Das Audiostück wird, wie es ausgeführt worden ist, gefenstert, wobei ein erstes Fenster mit i und ein zweites Fenster mit j bezeichnet sind. Insgesamt hat das Audiostück z. B. K Fenster. Dies bedeutet, dass die Ähnlichkeitsmatrix K Zeilen und K Spalten hat. Dann wird für jedes Fenster i und für jedes Fenster j ein Ähnlichkeitsmaß zueinander berechnet, wobei das berechnete Ähnlichkeitsmaß oder Distanzmaß $D(i,j)$ an der durch i und j bezeichneten Zeile bzw. Spalte in der Ähnlichkeitsmatrix eingegeben wird. Eine Spalte zeigt daher die Ähnlichkeit des durch j bezeichneten Fensters zu allen anderen Audiofenstern in dem Musikstück. Die Ähnlichkeit des Fensters j zum allerersten Fenster des Musikstücks würde dann in der Spalte j und in der Zeile 1 stehen. Die Ähnlichkeit des Fensters j zum zweiten Fenster des Musikstücks würde dann in der Spalte j, aber nunmehr in der Zeile 2 stehen. Dagegen würde die Ähnlichkeit des zweiten Fensters zum ersten Fenster in der zweiten Spalte der Matrix und in der ersten Zeile der Matrix stehen.

Es ist zu sehen, dass die Matrix dahingehend redundant ist, dass sie zur Diagonalen symmetrisch ist, und dass auf der Diagonalen die Ähnlichkeit eines Fensters zu sich selbst steht, was den trivialen Fall einer 100%-igen Ähnlichkeit darstellt.

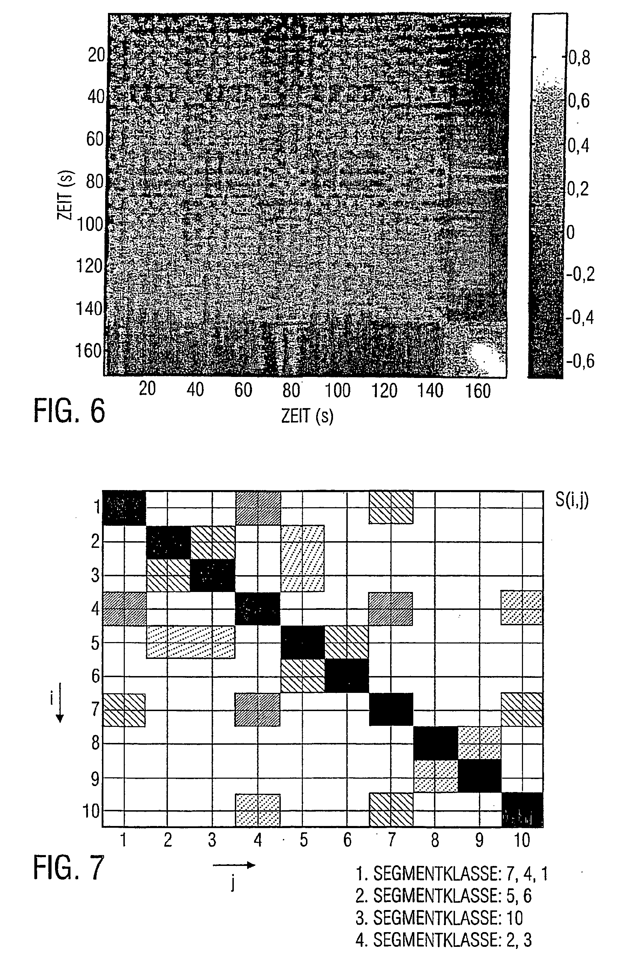

Ein Beispiel für eine Ähnlichkeitsmatrix eines Stücks ist in Fig. 6 zu sehen. Hier ist wieder die komplett symmetrische Struktur der Matrix bezüglich der Hauptdiagonalen erkennbar, wobei die Hauptdiagonale als heller Streifen ersichtlich ist. Ferner wird darauf hingewiesen, dass auf Grund der kleinen Fensterlänge im Vergleich zu der relativ groben Zeitauflösung in Fig. 6 die Hauptdiagonale nicht als heller durchgehender Strich zu sehen ist, sondern aus Fig. 6 nur in etwa erkennbar ist.

Hierauf wird unter Verwendung der Ähnlichkeitsmatrix, wie sie z. B. in Fig. 6 dargestellt ist, eine Kernel-Korrelation 512 mit einer Kernel-Matrix 514 durchgeführt, um ein Neuheitsmaß, das auch als "Novelty Score" bekannt ist, zu erhalten, das gemittelt werden könnte und in geglätteter Form in Fig. 9 dargestellt ist. Die Glättung dieses Novelty Scores ist in Fig. 5 schematisch durch einen Block 516 dargestellt.

Hierauf werden in einem Block 518 die Segmentgrenzen unter Verwendung des geglätteten Neuheitswertverlaufs ausgelesen, wobei hierzu die lokalen Maxima im geglätteten Neuheitsverlauf ermittelt und gegebenenfalls noch um eine durch die Glättung verursachte konstante Anzahl von Samples verschoben werden müssen, um tatsächlich die richtigen Segmentgrenzen des Audiostücks als absolute oder relative Zeitangabe zu erhalten.

Hierauf wird, wie es bereits in einem mit Clustering bezeichneten Block aus Fig. 5 ersichtlich ist, eine so genannte Segmentähnlichkeitsdarstellung oder Segmentähnlichkeitsmatrix erstellt. Ein Beispiel für eine Segmentähnlichkeitsmatrix ist in Fig. 7 dargestellt. Die Ähnlichkeitsmatrix in Fig. 7 ist prinzipiell ähnlich zu der Merkmals-Ähnlichkeitsmatrix von Fig. 6, wobei nun jedoch nicht mehr, wie in Fig. 6, Merkmale aus Fenstern verwendet werden, sondern Merkmale aus einem ganzen Segment. Die Segmentähnlichkeitsmatrix hat eine ähnliche Aussage wie die Merkmalsähnlichkeitsmatrix, jedoch mit einer wesentlich gröberen Auflösung, was natürlich gewünscht ist, wenn betrachtet wird, dass Fensterlängen im Bereich von 0,05 Sekunden liegen, während vernünftig lange Segmente im Bereich von vielleicht 10 Sekunden eines Stückes liegen.

Hierauf wird dann in einem Block 522 ein Clustering durchgeführt, also eine Einordnung der Segmente in Segmentklassen (eine Einordnung von ähnlichen Segmenten in dieselbe Segmentklasse), um dann in einem Block 524 die gefundenen Segmentklassen zu markieren, was auch als "Labeling" bezeichnet wird. So wird im Labeling ermittelt, welche Segmentklasse Segmente enthält, die Strophen sind, die Refrains sind, die Intros, Outros, Bridges, etc. sind.

Schließlich wird in einem mit 526 in Fig. 5 bezeichneten Block eine Musicsummary erstellt, die z. B. einem Benutzer bereitgestellt werden kann, um ohne Redundanz von einem Stück nur z. B. eine Strophe, einen Refrain und das Intro zu hören.

Nachfolgend wird auf die einzelnen Blöcke noch detaillierter eingegangen.

Wie es bereits ausgeführt worden ist, findet die eigentliche Segmentierung des Musikstücks erst dann statt, wenn die Merkmalsmatrizen generiert und gespeichert sind (Block 504).

Je nach dem, anhand welchen Merkmals das Musikstück auf seine Struktur hin untersucht werden soll, wird die entsprechende Merkmalsmatrix ausgelesen und zur Weiterverarbeitung in einen Arbeitsspeicher geladen. Die Merkmalsmatrix hat die Dimension Anzahl der Analysefenster mal Anzahl der Merkmalskoeffizienten.

Durch die Ähnlichkeitsmatrix wird der Merkmalsverlauf eines Stücks in eine zweidimensionale Darstellung gebracht. Für jede paarweise Kombination von Merkmalsvektoren wird das Distanzmaß berechnet, das in der Ähnlichkeitsmatrix festgehalten wird. Zur Berechnung des Distanzmaßes zwischen zwei Vektoren gibt es verschiedene Möglichkeiten, nämlich beispielsweise die Euklidsche Distanzmessung und die Cosinus-Distanzmessung. Ein Ergebnis D (i,j) zwischen den zwei Merkmalsvektoren wird im i,j-ten Element der Fenster-Ähnlichkeitsmatrix (Block 506) gespeichert. Die Hauptdiagonale der Ähnlichkeitsmatrix repräsentiert den Verlauf über das gesamte Stück. Dementsprechend resultieren die Elemente der Hauptdiagonalen aus dem jeweiligen Vergleich eines Fensters mit sich selbst und weisen immer den Wert der größten Ähnlichkeit auf. Bei der Cosinus-Distanzmessung ist dies der Wert 1, bei der einfachen skalaren Differenz und der Euklidschen Distanz ist dieser Wert gleich 0.

Zur Visualisierung einer Ähnlichkeitsmatrix, wie sie in Fig. 6 dargestellt ist, bekommt jedes Element i, j einen Grauwert zugewiesen. Die Grauwerte sind proportional zu den Ähnlichkeitswerten abgestuft, so dass die maximale Ähnlichkeit (die Hauptdiagonale) der maximalen Ähnlichkeit entspricht. Durch diese Darstellung kann man die Struktur eines Liedes bereits optisch auf Grund der Matrix erkennen. Bereiche ähnlicher Merkmalsausprägung entsprechen Quadranten ähnlicher Helligkeit entlang der Hauptdiagonalen. Die Grenzen zwischen den Bereichen zu finden, ist die Aufgabe der eigentlichen Segmentierung.

Die Struktur der Ähnlichkeitsmatrix ist wichtig für das in der Kernel-Korrelation 512 berechnete Neuheitsmaß. Das Neuheitsmaß entsteht durch die Korrelation eines speziellen Kernels entlang der Hauptdiagonalen der Ähnlichkeitsmatrix. Ein beispielhafter Kernel K ist in Fig. 5 dargestellt. Korreliert man diese Kernel-Matrix entlang der Hauptdiagonalen der Ähnlichkeitsmatrix S, und summiert dabei alle Produkte der übereinander liegenden Matrixelemente für jeden Zeitpunkt i des Stücks, so erhält man das Neuheitsmaß, das in geglätteter Form beispielhaft in Fig. 9 dargestellt ist. Vorzugsweise wird nicht der Kernel K in Fig. 5 verwendet, sondern ein vergrößerter Kernel, der zudem mit einer Gaussverteilung überlagert ist, so dass die Kanten der Matrix gegen 0 streben.

Die Selektion der markanten Maxima im Neuheitsverlauf ist wichtig für die Segmentierung. Die Auswahl aller Maxima des ungeglätteten Neuheitsverlaufs würde zu einer starken Übersegmentierung des Audiosignals führen.

Daher sollte das Neuheitsmaß geglättet werden, und zwar mit verschiedenen Filtern, wie beispielsweise IIR-Filter oder FIR-Filter.

Sind die Segmentgrenzen eines Musikstücks extrahiert, so müssen nun ähnliche Segmente als solche gekennzeichnet und in Klassen gruppiert werden.

Foote und Cooper beschreiben die Berechnung einer segmentbasierten Ähnlichkeitsmatrix mittels einer Cullback-Leibler-Distanz. Hierfür werden anhand der aus dem Neuheitsverlauf gewonnenen Segmentgrenzen einzelne Segmentmerkmalsmatrizen aus der gesamten Merkmalsmatrix extrahiert, d. h. jede dieser Matrizen ist eine Submatrix der gesamten Merkmalsmatrix. Die damit entstandene Segmentähnlichkeitsmatrix 520 wird nunmehr einer Singularwertzerlegung (SVD; SVD = Singular Value Decomposition) unterzogen. Hierauf erhält man Singulärwerte in absteigender Reihenfolge.

Im Block 526 wird dann eine automatische Zusammenfassung eines Stücks anhand der Segmente und Cluster eines Musikstücks durchgeführt. Hierzu werden zunächst die zwei Cluster mit den größten Singulärwerten ausgewählt. Dann wird das Segment mit dem Maximalwert des entsprechenden Cluster-Indikators zu dieser Summary hinzugefügt. Dies bedeutet, dass die Summary eine Strophe und einen Refrain umfasst. Alternativ können auch alle wiederholten Segmente entfernt werden, um sicherzustellen, dass alle Informationen des Stücks bereitgestellt werden, jedoch immer genau einmal.

Bezüglich weiterer Techniken zur Segmentierung/Musikanalyse wird auf CHU, s. / LOGAN B.: Music Summary using Key Phrases. Technical Report, Cambridge Research Laboratory 2000, BARTSCH, M.A. / WAKEFIELD, g. H.: To Catch a Chorus: Using Chroma-Based Representation for Audio Thumbnailing. Proceedings of the IEEE Workshop of Signal Processing to Audio and Acoustics 2001. http://musen.engin.umich.edu/papers/ bartsch wakefield waspaa01 final.pdf, verwiesen

Nachteilig an dem bekannten Verfahren ist die Tatsache, dass die Singularwertzerlegung (SVD) zur Segmentklassenbildung, also zum Zuordnen von Segmenten zu Clustern zum einen sehr rechenaufwendig ist und zum anderen problematisch in der Beurteilung der Ergebnisse ist. So wird dann, wenn die Singularwerte nahezu gleich groß sind, eine möglicherweise falsche Entscheidung dahingehend getroffen, dass die beiden ähnlichen Singularwerte eigentlich die gleiche Segmentklasse und nicht zwei unterschiedliche Segmentklassen darstellen.

Ferner wurde herausgefunden, dass die Ergebnisse, die durch die Singularwertzerlegung erhalten werden, dann immer problematischer werden, wenn es starke Ähnlichkeitswertunterschiede gibt, wenn also ein Stück sehr ähnliche Anteile enthält, wie Strophe und Refrain, aber auch relativ unähnliche Anteile, wie Intro, Outro oder Bridge.

Ferner problematisch an dem bekannten Verfahren ist, dass immer davon ausgegangen wird, dass der Cluster unter den beiden Clustern mit den höchsten Singularwerten, der das erste Segment im Lied hat, der Cluster "Strophe" ist, und dass der andere Cluster der Cluster "Refrain" ist. Dieses Prozedere basiert darauf, dass man im bekannten Verfahren davon ausgeht, dass ein Lied immer mit einer Strophe beginnt. Erfahrungen haben gezeigt, dass damit erhebliche Labelingfehler erhalten werden. Dies ist insofern problematisch, da das Labeling gewissermaßen die "Ernte" des gesamten Verfahrens ist, also das, was der Benutzer unmittelbar erfährt. Waren die vorhergehenden Schritte noch so präzise und aufwändig, so relativiert sich alles, wenn am Ende falsch gelabelt wird, da dann beim Benutzer das Vertrauen in das gesamte Konzept insgesamt Schaden nehmen könnte.

An dieser Stelle sei ferner darauf hingewiesen, dass insbesondere Bedarf nach automatischen Musikanalyseverfahren besteht, ohne dass das Ergebnis immer überprüft und gegebenenfalls korrigiert werden kann. Statt dessen ist ein Verfahren nur dann am Markt einsetzbar, wenn es automatisch ohne menschliche Nachkorrektur ablaufen kann.

Das bekannte Konzept ist insbesondere dann problematisch und fehleranfällig beim Labeling, wenn z. B. das letzte Segment der angeblichen Strophen-Segmentklasse gleichzeitig das letzte Segment des Audiostücks ist. Dann ist sehr wahrscheinlich ein Fehler gemacht worden, da ein Audiostück nur sehr selten mit einer Strophe aufhört.

Ferner ist die Segmentklassen-Bezeichnung auf der Basis der Absolutwerte der Singularwerte dann problematisch, wenn es zwei Singularwerte gibt, die relativ ähnliche Werte haben, oder wenn es sogar vielleicht einen dominanten Singularwert gibt, aber auch noch einen zweiten und einen dritten Singularwert, die zwar beide einen großen Abstand zum ersten Singularwert haben, jedoch untereinander einen kleinen Abstand haben. An dieser Stelle müssen Qualitätseinbußen beim Labeling in Kauf genommen werden, was letztendlich darin resultieren kann, dass der Refrain als Strophe bezeichnet wird und die Strophe als Refrain bezeichnet wird, oder dass vielleicht ein Zwischenspiel, das mit dem Solo und dem Intro/Outro relativ ähnlich ist, als Refrain bezeichnet wird, während der eigentliche Refrain nicht als solcher erkannt wird.

Die Aufgabe der vorliegenden Erfindung besteht darin, ein verbessertes und gleichzeitig effizient implementierbares Konzept zum Bezeichnen von verschiedenen Segmentklassen zu schaffen.

Diese Aufgabe wird durch eine Vorrichtung zum Bezeichnen von verschiedenen Segmentklassen gemäß Patentanspruch 1, ein Verfahren zum Bezeichnen von verschiedenen Segmentklassen gemäß Patentanspruch 21 oder ein Computer-Programm gemäß Patentanspruch 22 gelöst.

Der vorliegenden Erfindung liegt die Erkenntnis zugrunde, dass zur Hauptteile-Auswahl unter wenigstens zwei Kandidaten-Segmentklassen eine Untersuchung der zeitlichen Positionen von Segmenten in den beiden Kandidaten-Segmentklassen eine Segmentklassen-Bezeichnung bzw. ein Segmentklassen-Labeling mit geringerer Fehlerquote liefert. Insbesondere wurde herausgefunden, dass die Segmentklasse aus den beiden Strophe/Refrain-Kandidatenklassen, die ein Segment hat, das im Liedverlauf später als alle Segmente der anderen Kandidaten-Segmentklasse auftritt, in nahezu jedem Fall die Refrain-Segmentklasse ist. Die erfindungsgemäße Bezeichnung der Segmentklassen durch Untersuchen des spätesten Segments der beiden Segmentklassen und durch Bezeichnen der Segmentklasse als Refrain-Segmentklasse, die das letzte Segment beider Klassen im Liedverlauf hat.

Der Zugriff auf zeitliche Positionen von einem oder mehreren Segmenten in einer oder mehreren Segmentklassen kostet nur einen kleinen zusätzlichen Aufwand, da die Segmente in dem Klassen, ohnehin samt ihrer zeitlichen Positionen vorliegen. Die Segmentklassen-Bezeichnung wird somit durch einige wenige Abfragen bzw. Vergleiche im Hinblick auf die zeitliche Position von einem oder mehreren Segmenten in der ersten Kandidaten-Segmentklasse und der zweiten Kandidaten-Segmentklasse wesentlich verbessert, da in der erfindungsgemäßen Zuweisung allgemeine Erkenntnisse über Strukturen von Musikstücken berücksichtigt werden können.

Das erfindungsgemäße Konzept, das auf der Verwendung der Segmentinformationen der Kandidaten-Segmentklassen basiert, vermeidet auch schwer entscheidbare Situationen, wie sie beispielsweise dann auftreten, wenn ähnlich große Singularwerte im Stand der Technik auftreten. Für die Segmentbezeichnung auf der Basis der zeitlichen Positionen von Segmenten in den Kandidaten-Segmentklassen gibt es immer eine klare Antwort, da per Definition ein Segment immer einen eindeutigen zeitlichen Ausschnitt des Musikstücks haben wird und damit eine Beziehung zum Musikstück bzw. zu einem anderen Segment haben wird, die entweder das letzte Segment, das erste Segment, vor dem anderen Segment oder nach dem anderen Segment sein wird. Schwer entscheidbare Zustände existieren hier nicht. Auch aus diesem Grund ist das erfindungsgemäße Konzept effizient implementierbar und eignet sich auch besonders gut für eine automatisierte Implementierung.

An dieser Stelle sei darauf hingewiesen, dass insbesondere die Automatisierbarkeit für eine großvolumige Anwendung des erfindungsgemäßen Konzepts bzw. allgemein der Musikanalyse auf der Basis einer Segmentierung nötig ist. Dies liegt daran, dass die Hauptanwendungen immer in Verbindung mit großen Musikdatenbanken und damit der Verarbeitung von erheblichen Mengen an Daten zu sehen ist, die in vielen Fällen nur durch eine automatisierte Algorithmus-Abarbeitung bewältigbar ist.

Bei einem Ausführungsbeispiel wird die Zuweisung eines Segments zu einer Segmentklasse auf der Basis eines adaptiven Ähnlichkeits-Mittelwerts für ein Segment durchgeführt, derart, dass durch den Ähnlichkeits-Mittelwert berücksichtigt wird, welchen insgesamten Ähnlichkeits-Score ein Segment im gesamten Stück hat. Nachdem für ein Segment ein solcher Ähnlichkeits-Mittelwert berechnet worden ist, zu dessen Berechnung die Anzahl der Segmente und die Ähnlichkeitswerte der dem Segment zugeordneten Mehrzahl von Ähnlichkeitswerten benötigt werden, wird dann die tatsächliche Zuweisung eines Segments zu einer Segmentklasse, also zu einem Cluster, auf der Basis dieses Ähnlichkeits-Mittelwerts durchgeführt. Liegt ein Ähnlichkeitswert eines Segments zu dem gerade betrachteten Segment beispielsweise oberhalb des Ähnlichkeits-Mittelwerts, so wird das Segment als zu der gerade betrachteten Segmentklasse zugehörig zugewiesen. Liegt der Ähnlichkeitswert eines Segments zu dem gerade betrachteten Segment dagegen unterhalb dieses Ähnlichkeits-Mittelwerts, so wird es nicht der Segmentklasse zugewiesen.

In anderen Worten ausgedrückt bedeutet dies, dass die Zuweisung nicht mehr abhängig von der absoluten Größe der Ähnlichkeitswerte durchgeführt wird, sondern relativ zu dem Ähnlichkeits-Mittelwert. Dies bedeutet, dass für ein Segment, das einen relativ geringen Ähnlichkeits-Score hat, also z. B. für ein Segment, das ein Intro oder Outro hat, der Ähnlichkeits-Mittelwert niedriger sein wird als für ein Segment, das eine Strophe oder ein Refrain ist. Damit werden die starken Abweichungen der Ähnlichkeiten von Segmenten in Stücken bzw. der Häufigkeit des Auftretens von bestimmten Segmenten in Stücken berücksichtigt, wobei z. B. numerische Probleme und damit auch Mehrdeutigkeiten und damit verbundene Falsch-Zuweisungen vermieden werden können.

Das erfindungsgemäße Konzept eignet sich besonders für Musikstücke, die nicht nur aus Strophen und Refrains bestehen, also die Segmente haben, die zu Segmentklasse gehören, die gleich große Ähnlichkeitswerte haben, sondern auch für Stücke, die neben Strophe und Refrain auch andere Teile haben, nämlich eine Einführung (Intro), ein Zwischenspiel (Bridge) oder einen Ausklang (Outro).

Bei einem bevorzugten Ausführungsbeispiel der vorliegenden Erfindung werden die Berechnung des adaptiven Ähnlichkeits-Mittelwertes und das Zuweisen eines Segments iterativ durchgeführt, wobei Ähnlichkeitswerte von zugewiesenen Segmenten beim nächsten Iterationsdurchgang ignoriert werden. Damit kann sich für den nächsten Iterationsdurchgang ein anderer Ähnlichkeits-Absolutwert das Maximum sein, da bereits zugewiesene Segmente (also auch frühere Maxima) zu 0 gesetzt worden sind.

Bei einem bevorzugten Ausführungsbeispiel der vorliegenden Erfindung wird eine Segmentierungs-Nachkorrektur durchgeführt, und zwar dahingehend, dass nach der Segmentierung z. B. auf Grund des Neuheitswertes (der lokalen Maxima des Neuheitswertes) und nach einer anschließenden Zuordnung zu Segmentklassen relativ kurze Segmente untersucht werden, um zu sehen, ob sie dem Vorgänger-Segment oder dem Nachfolger-Segment zugeordnet werden können, da Segmente unterhalb einer minimalen Segmentlänge mit hoher Wahrscheinlichkeit auf eine Übersegmentierung hindeuten.

Bei einem alternativen bevorzugten Ausführungsbeispiel der vorliegenden Erfindung wird nach der abschließenden Segmentierung und Zuordnung in die Segmentklassen ein Labeling durchgeführt, und zwar unter Verwendung eines speziellen Auswahlalgorithmus, um eine möglichst korrekte Kennzeichnung der Segmentklassen als Strophe oder Refrain zu erhalten.

Bevorzugte Ausführungsbeispiele der vorliegenden Erfindung werden nachfolgend Bezug nehmend auf die beiliegende Zeichnung detailliert erläutert. Es zeigen:

Fig. 1            ein Blockschaltbild der erfindungsgemäßen Vorrichtung zum Gruppieren gemäß einem bevorzugten Ausführungsbeispiel der vorliegenden Erfindung;

Fig. 2            ein Flussdiagramm zur Darstellung einer bevorzugten Ausführungsform der Erfindung zum iterativen Zuweisen;

Fig. 3            ein Blockdiagramm der Funktionsweise der Segmentierungskorrektureinrichtung;

Fig. 4a und Fig. 4b    eine bevorzugte Ausführungsform der Segmentklassenbezeichnungseinrichtung;

Fig. 5            ein Gesamtblockschaltbild eines Audioanalysewerkzeugs;

Fig. 6            eine Darstellung einer beispielhaften Merkmalsähnlichkeitsmatrix;

Fig. 7            eine beispielhafte Darstellung einer Segmentähnlichkeitsmatrix;

Fig. 8            eine schematische Darstellung zur Veranschaulichung der Elemente in einer Ähnlichkeitsmatrix S; und

Fig. 9            eine schematische Darstellung eines geglätteten Neuheitswerts.

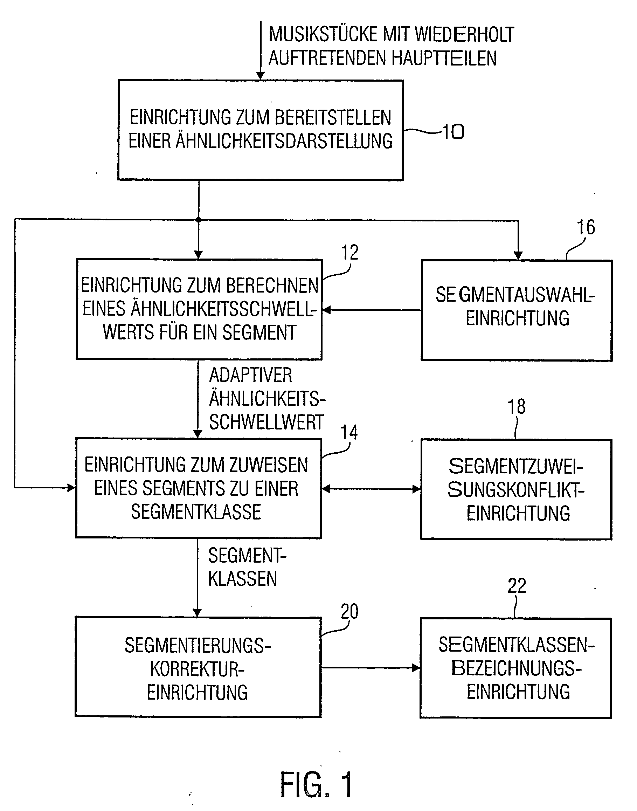

Fig. 1 zeigt eine Vorrichtung zum Gruppieren von zeitlichen Segmenten eines Musikstücks, das in in dem Musikstück wiederholt auftretende Hauptteile gegliedert ist, in verschiedene Segmentklassen, wobei eine Segmentklasse einem Hauptteil zugeordnet ist. Die vorliegende Erfindung bezieht sich somit besonders auf Musikstücke, die einer gewissen Struktur unterliegen, in der ähnliche Abschnitte mehrmals erscheinen und sich mit anderen Abschnitten abwechseln. Die meisten Rock- und Popsongs besitzen eine klare Struktur in Bezug auf ihre Hauptteile.

Die Literatur behandelt das Thema der Musikanalyse hauptsächlich anhand klassischer Musik, davon gilt jedoch auch vieles für Rock- und Popmusik. Die Hauptteile eines Musikstücks werden auch "Großformteile" genannt. Unter einem Großformteil eines Stücks versteht man einen Abschnitt, der hinsichtlich verschiedener Merkmale, z. B. Melodik, Rhythmik, Textur, usw., eine relativ einheitliche Beschaffenheit hat. Diese Definition gilt allgemein in der Musiktheorie.

Großformteile in der Rock- und Popmusik sind z. B. Strophe, Refrain, Bridge und Solo. In der klassischen Musik wird ein Wechselspiel von Refrain und anderen Teilen (Couplets) einer Komposition auch Rondo genannt. Im Allgemeinen kontrastieren die Couplets zum Refrain, beispielsweise hinsichtlich Melodik, Rhythmik, Harmonik, Tonart oder Instrumentation. Dies lässt sich auch auf moderne Unterhaltungsmusik übertragen. So wie es bei dem Rondo verschiedene Formen gibt (Kettenrondo, Bogenrondo, Sonatenrondo), bestehen auch in Rock- und Popmusik bewährte Muster zum Aufbau eines Liedes. Diese sind natürlich nur einige Möglichkeiten aus vielen. Letztendlich entscheidet natürlich der Komponist, wie sein Stück aufgebaut ist. Ein Beispiel für einen typischen Aufbau eines Rockliedes ist das Muster.

A-B-A-B-C-D-A-B,

wobei A gleich Strophe, B gleich Refrain, C gleich Bridge und D gleich Solo gilt. Oftmals wird ein Musikstück mit einem Vorspiel (Intro) eingeleitet. Intros bestehen häufig aus der gleichen Akkordfolge wie die Strophe, allerdings mit anderer Instrumentation, z. B. ohne Schlagzeug, ohne Bass oder ohne Verzerrung der Gitarre bei Rockliedern etc.

Die erfindungsgemäße Vorrichtung umfasst zunächst eine Einrichtung 10 zum Bereitstellen einer Ähnlichkeitsdarstellung für die Segmente, wobei die Ähnlichkeitsdarstellung für jedes Segment eine zugeordnete Mehrzahl von Ähnlichkeitswerten aufweist, wobei die Ähnlichkeitswerte angeben, wie ähnlich das Segment zu jedem anderen Segment ist. Die Ähnlichkeitsdarstellung ist vorzugsweise die in Fig. 7 gezeigte Segment-Ähnlichkeitsmatrix. Sie hat für jedes Segment (in Fig. 7 Segmente 1-10) eine eigene Spalte, die den Index "j" hat. Ferner hat die Ähnlichkeitsdarstellung für jedes Segment eine eigene Zeile, wobei eine Zeile mit einem Zeilenindex i bezeichnet ist. Dies wird nachfolgend anhand des beispielhaften Segments 5 bezeichnet. Das Element (5,5) in der Hauptdiagonale der Matrix von Fig. 7 ist der Ähnlichkeitswert des Segments 5 mit sich selbst, also der maximale Ähnlichkeitswert. Ferner ist das Segment 5 noch mittelähnlich zum Segment Nr. 6, wie es durch das Element (6,5) oder durch das Element (5,6) der Matrix in Fig. 7 bezeichnet ist. Darüber hinaus hat das Segment 5 noch Ähnlichkeiten zu den Segmenten 2 und 3, wie es durch die Elemente (2,5) oder (3,5) oder (5,2) oder (5,3) in Fig. 7 gezeigt ist. Zu den anderen Segmenten 1, 4, 7, 8, 9, 10 hat das Segment Nr. 5 eine Ähnlichkeit, die in Fig. 7 nicht mehr sichtbar ist.

Eine dem Segment zugeordnete Mehrzahl von Ähnlichkeitswerten ist beispielsweise eine Spalte oder eine Zeile der Segment-Ähnlichkeitsmatrix in Fig. 7, wobei diese Spalte oder Zeile auf Grund ihres Spalten-/Zeilen-Indexes angibt, auf welches Segment sie sich bezieht, nämlich beispielsweise auf das fünfte Segment, und wobei diese Zeile/ Spalte die Ähnlichkeiten des fünften Segments zu jedem anderen Segment in dem Stück umfasst. Die Mehrzahl von Ähnlichkeitswerten ist also beispielsweise eine Zeile der Ähnlichkeitsmatrix oder, alternativ, eine Spalte der Ähnlichkeitsmatrix von Fig. 7.

Die Vorrichtung zum Gruppieren von zeitlichen Segmenten des Musikstücks umfasst ferner eine Einrichtung 12 zum Berechnen eines Ähnlichkeits-Mittelwertes für ein Segment, unter Verwendung der Segmente und der Ähnlichkeitswerte der dem Segment zugeordneten Mehrzahl von Ähnlichkeitswerten. Die Einrichtung 12 ist ausgebildet, um z. B. für die Spalte 5 in Fig. 7 einen Ähnlichkeits-Mittelwert zu berechnen. Wird bei einem bevorzugten Ausführungsbeispiel der arithmetische Mittelwert verwendet, so wird die Einrichtung 12 die Ähnlichkeitswerte in der Spalte addieren und durch die Anzahl der Segmente insgesamt teilen. Um die Selbstähnlichkeit zu eliminieren, könnte von dem Additionsergebnis auch die Ähnlichkeit des Segments mit sich selbst abgezogen werden, wobei natürlich dann auch eine Teilung nicht mehr durch sämtliche Elemente, sondern durch sämtliche Elemente weniger 1 durchzuführen ist.

Die Einrichtung 12 zum Berechnen könnte alternativ auch den geometrischen Mittelwert berechnen, also jeden Ähnlichkeitswert einer Spalte für sich quadrieren, um die quadrierten Ergebnisse zu summieren, um dann eine Wurzel aus dem Summationsergebnis zu berechnen, welche durch die Anzahl der Elemente in der Spalte (bzw. die Anzahl der Elemente in der Spalte weniger 1) zu teilen ist. Beliebige andere Mittelwerte, wie beispielsweise der Median-Wert etc. sind verwendbar, so lange der Mittelwert für jede Spalte der Ähnlichkeitsmatrix adaptiv berechnet wird, also ein Wert ist, der unter Verwendung der Ähnlichkeitswerte der dem Segment zugeordneten Mehrzahl von Ähnlichkeitswerten berechnet wird.

Der adaptiv berechnete Ähnlichkeits-Schwellenwert wird dann einer Einrichtung 14 zum Zuweisen eines Segments zu einer Segmentklasse geliefert. Die Einrichtung 14 zum Zuweisen ist ausgebildet, um ein Segment einer Segmentklasse zuzuordnen, wenn der Ähnlichkeitswert des Segments eine vorbestimmte Bedingung bezüglich des Ähnlichkeits-Mittelwerts erfüllt. Ist beispielsweise der Ähnlichkeits-Mittelwert so, dass ein größerer Wert auf eine größere Ähnlichkeit und ein kleinerer Wert auf eine geringere Ähnlichkeit hinweist, so wird die vorbestimmte Beziehung darin bestehen, dass der Ähnlichkeitswert eines Segments gleich oder oberhalb des Ähnlichkeits-Mittelwerts sein muss, damit das Segment einer Segmentklasse zugewiesen wird.

Bei einem bevorzugten Ausführungsbeispiel der vorliegenden Erfindung existieren noch weitere Einrichtungen, um spezielle Ausführungsformen zu verwirklichen, auf die später eingegangen wird. Diese Einrichtungen sind eine Segmentauswahleinrichtung 16, eine Segmentzuweisungskonflikteinrichtung 18, eine Segmentierungskorrektureinrichtung 20 sowie eine Segmentklassen-Bezeichnungseinrichtung 22.

Die Segmentauswahleinrichtung 16 in Fig. 1 ist ausgebildet, um zunächst für jede Spalte in der Matrix von Fig. 7 einen Gesamt-Ähnlichkeitswert V(j) zu berechnen, der folgendermaßen ermittelt wird:

$$V(j) = \sum_{i=1}^{P} S_s(i,j) - S\ddot{A} \quad j = 1,...,P$$

P ist die Anzahl der Segmente. SÄ ist der Wert der Selbstähnlichkeit eines Segments mit sich selbst. Je nach verwendeter Technik kann der Wert z. B. Null oder Eins sein. Die Segmentauswahleinrichtung 16 wird zunächst den Wert V(j) für jedes Segment berechnen, um dann das Vektorelement i des Vektors V mit maximalem Wert herauszufinden. Anders ausgedrückt bedeutet dies, dass die Spalte in Fig. 7 gewählt wird, die bei der Aufaddition der einzelnen Ähnlichkeitswerte in der Spalte den größten Wert oder Score erreicht. Dieses Segment könnte beispielsweise das Segment Nr. 5 bzw. die Spalte 5 der Matrix in Fig. 7 sein, da dieses Segment mit drei anderen Segmenten zumindest eine gewisse Ähnlichkeit hat. Ein anderer Kandidat bei dem Beispiel von Fig. 7 könnte auch das Segment mit der Nr. 7 sein, da dieses Segment ebenfalls zu drei anderen Segmenten eine gewisse Ähnlichkeit hat, die zudem noch größer ist als die Ähnlichkeit des Segments 5 zu den Segmenten 2 und 3 (höhere Grauschattierung in Fig. 7).

Für das nachfolgende Beispiel wird nunmehr angenommen, dass die Segmentauswahleinrichtung 16 das Segment Nr. 7 auswählt, da es den höchsten Ähnlichkeits-Score auf Grund der Matrixelemente (1,7), (4,7) und (10,7) hat. Dies bedeutet in anderen Worten, dass V(7) die Komponente des Vektors V ist, die den maximalen Wert unter allen Komponenten von V hat.

Nunmehr wird der Ähnlichkeits-Score der Spalte 7, also für das Segment Nr. 7 noch durch die Zahl "9" geteilt, um aus der Einrichtung 12 den Ähnlichkeits-Schwellwert für das Segment zu erhalten.

Hierauf wird in der Segment-Ähnlichkeitsmatrix für die siebte Zeile bzw. Spalte überprüft, welche Segmentähnlichkeiten über dem berechneten Schwellwert liegen, d. h. mit welchen Segmenten das i-te Segment eine überdurchschnittliche Ähnlichkeit aufweist. All diese Segmente werden nunmehr ebenfalls wie das siebte Segment einer ersten Segmentklasse zugewiesen.

Für das vorliegende Beispiel wird angenommen, dass die Ähnlichkeit des Segments 10 zum Segment 7 unterdurchschnittlich ist, dass jedoch die Ähnlichkeiten des Segments 4 und des Segments 1 zum Segment 7 überdurchschnittlich sind. Daher werden in die erste Segmentklasse neben dem Segment Nr. 7 auch das Segment Nr. 4 und das Segment Nr. 1 eingeordnet. Dagegen wird das Segment Nr. 10 auf Grund der unterdurchschnittlichen Ähnlichkeit zum Segment Nr. 7 nicht in die erste Segmentklasse eingeordnet.

Nach der Zuweisung werden die korrespondierenden Vektorelemente V(j) aller Segmente, die in dieser Schwellwertuntersuchung einem Cluster zugeordnet wurden, zu 0 gesetzt. Im Beispiel sind dies neben V(7) auch die Komponenten V(4) und V(1). Dies bedeutet unmittelbar, dass die 7., 4. und 1. Spalte der Matrix nicht mehr für eine spätere Maximalsuche zur Verfügung stehen werden, das sie Null sind, also keinesfalls ein Maximum sein können.

Dies ist in etwa gleichbedeutend damit, dass die Einträge (1,7), (4,7), (7,7) und (10,7) der Segmentähnlichkeitsmatrix zu 0 gesetzt werden. Dasselbe Prozedere wird für die Spalte 1 (Elemente (1,1), (4,1) und (7,1)) und die Spalte 4 (Elemente (1,4), (4,4), (7,4) und (10, 4)) durchgeführt. Aufgrund der einfacheren Handhabbarkeit, wird jedoch die Matrix nicht verändert, sondern werden die Komponenten von V, die zu einem zugewiesenen Segment gehören, bei der nächsten Maximumsuche in einem späteren Iterationsschritt ignoriert.

In einem nächsten Iterationsschritt wird nunmehr ein neues Maximum unter den noch verbleibenden Elementen von V, also unter V(2), V(3), V(5), V(6,), V(8), V(9) und V(10) gesucht. Voraussichtlich wird dann das Segment Nr. 5, also V (5), den größten Ähnlichkeits-Score ergeben. Die zweite Segmentklasse erhält dann die Segmente 5 und 6. Auf Grund der Tatsache, dass die Ähnlichkeiten zu den Segmenten 2 und 3 unterdurchschnittlich sind, werden die Segmente 2 und 3 nicht in den Cluster zweiter Ordnung gebracht. Damit werden die Elemente V(6) und V(5) vom Vektor V auf Grund der erfolgten Zuweisung zu 0 gesetzt, während noch die Komponenten V(2), V(3), V(8), V(9) und V(10) des Vektors für die Auswahl des Clusters dritter Ordnung verbleiben.

Hierauf wird wieder ein neues Maximum unter den genannten verbleibenden Elementen von V gesucht. Das neue Maximum könnte V(10) sein, also die Komponente von V für das Segment 10. Segment 10 kommt also in die Segmentklasse dritter Ordnung. So könnte sich ferner herausstellen, dass das Segment 7 auch zum Segment 10 eine überdurchschnittliche Ähnlichkeit hat, obgleich das Segment 7 bereits der ersten Segmentklasse zugehörig gekennzeichnet ist. Es entsteht somit ein Zuweisungskonflikt, der durch die Segmentzuweisungskonflikteinrichtung 18 von Fig. 1 aufgelöst wird.

Eine einfache Art der Auflösung könnte sein, einfach in die dritte Segmentklasse das Segment 7 nicht zuzuweisen und z. B. statt dessen das Segment 4 zuzuweisen, falls für das Segment 4 nicht ebenfalls ein Konflikt existieren würde.

Vorzugsweise wird jedoch, um die Ähnlichkeit zwischen dem Segment 7 und dem Segment 10 nicht unberücksichtigt zu lassen, die Ähnlichkeit zwischen 7 und 10 in nachfolgendem Algorithmus berücksichtigt.

Allgemein ist die Erfindung ausgelegt, um die Ähnlichkeit zwischen i und k nicht unberücksichtigt zu lassen. Daher werden die Ähnlichkeitswerte $S_s(i,k)$ von Segment i und k mit dem Ähnlichkeitswert $S_s(i^*,k)$ verglichen, wobei i* das erste Segment ist, das dem Cluster C* zugeordnet wurde. Der Cluster bzw. die Segmentklasse C* ist der Cluster, dem das Segment k bereits auf Grund einer vorherigen Untersuchung zugeordnet ist. Der Ähnlichkeitswert $S_s(i^*,k)$ ist ausschlaggebend dafür, dass das Segment k dem Cluster C* zugehörig ist. Ist $S_s(i^*,k)$ größer als $S_s(i,k)$, so bleibt das Segment k im Cluster C*. Ist $S_s(i^*,k)$ kleiner als $S_s(i,k)$, so wird das Segment k aus dem Cluster C* herausgenommen und dem Cluster C zugewiesen. Für den ersten Fall, also wenn das Segment k nicht die Clusterzugehörigkeit wechselt, wird für das Segment i eine Tendenz zum Cluster C* vermerkt-Vorzugsweise wird diese Tendenz jedoch auch dann vermerkt, wenn das Segment k die Clusterzugehörigkeit wechselt. In diesem Fall wird eine Tendenz dieses Segments zum Cluster, in den es ursprünglich aufgenommen wurde, vermerkt. Diese Tendenzen können vorteilhafterweise bei einer Segmentierungskorrektur, die durch die Segmentierungskorrektureinrichtung 20 ausgeführt wird, verwendet werden.

Die Ähnlichkeitswertüberprüfung wird, auf Grund der Tatsache, dass das Segment 7 das "Ursprungssegment" in der ersten Segmentklasse ist, zugunsten der ersten Segmentklasse ausgehen. Das Segment 7 wird also seine Clusterzugehörigkeit (Segmentzugehörigkeit) nicht ändern, sondern es wird in der ersten Segmentklasse verbleiben.

Diese Tatsache wird jedoch dadurch berücksichtigt, dass dem Segment Nr. 10 in der dritten Segmentklasse ein Trend zur ersten Segmentklasse attestiert wird.

Erfindungsgemäß wird damit berücksichtigt, dass insbesondere für die Segmente, deren Segment-Ähnlichkeiten zu zwei unterschiedlichen Segmentklassen existieren, diese Ähnlichkeiten dennoch nicht ignoriert werden, sondern gegebenenfalls später durch den Trend bzw. die Tendenz doch noch berücksichtigt werden.

Das Prozedere wird so lange fortgeführt, bis alle Segmente in der Segment-Ähnlichkeitsmatrix zugeordnet sind, was der Fall ist, wenn alle Elemente vom Vektor V zu Null gesetzt sind.

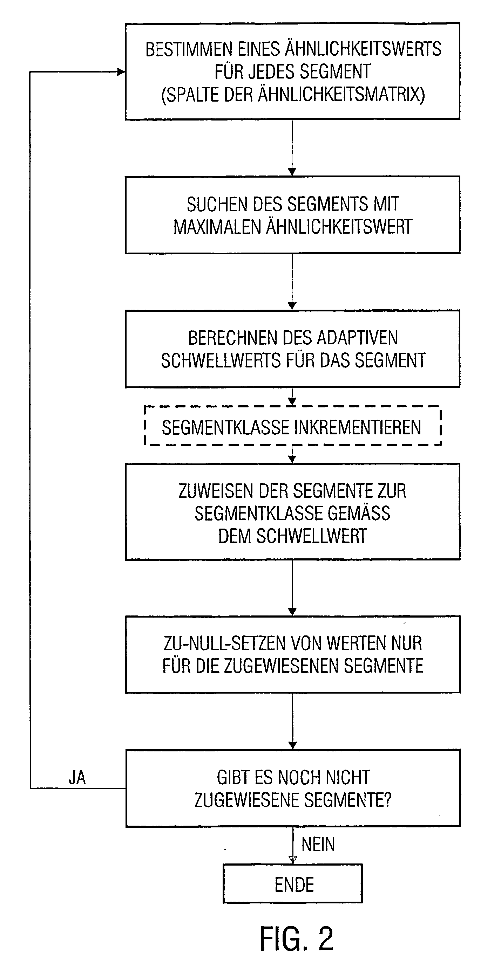

Dies würde für das in Fig. 7 gezeigte Beispiel bedeuten, dass als nächstes, in die vierte Segmentklasse, das Maximum von V(2), V(3), V(8), V(9), also das Segment 2 und 3 eingeordnet werden, um dann, in einer fünften Segmentklasse, die Segmente 8 bzw. 9 einzuordnen, bis alle Segmente zugeordnet worden sind. Damit ist der in Fig. 2 gezeigte iterative Algorithmus beendet.

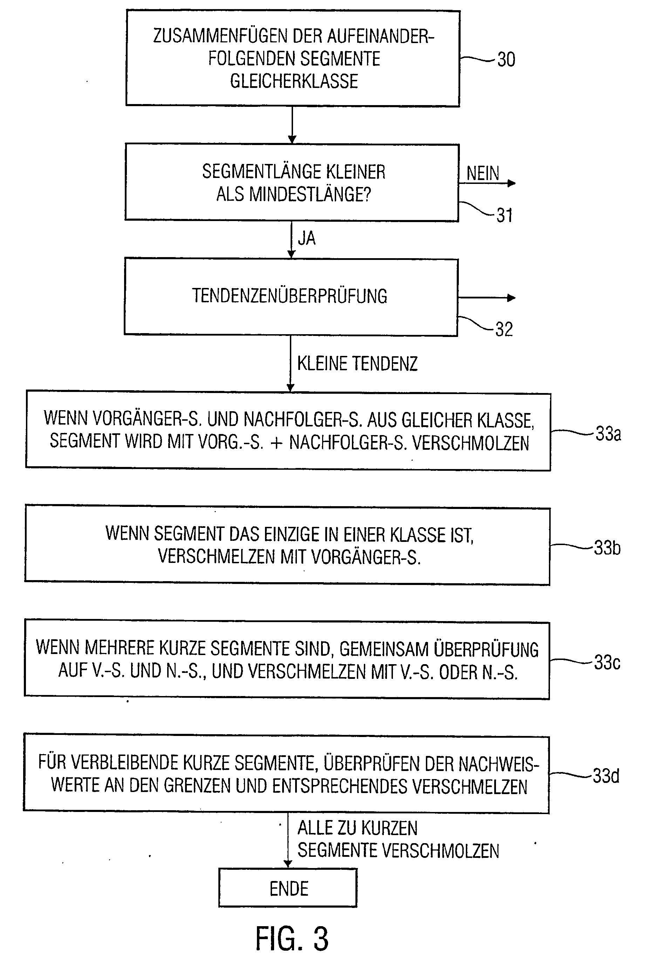

Nachfolgend wird detailliert auf die bevorzugte Implementierung der Segmentierungskorrektureinrichtung 20 anhand von Fig. 3 eingegangen.

So ergibt sich, dass bei der Berechnung der Segmentgrenzen mittels der Kernel-Korrelation, jedoch auch bei der Berechnung von Segmentgrenzen mittels anderer Maßnahmen häufig eine Übersegmentierung eines Stücks entsteht, d. h. es werden zu viele Segmentgrenzen bzw. allgemein zu kurze Segmente berechnet. Eine Übersegmentierung, z. B. hervorgerufen durch eine falsche Unterteilung der Strophe, wird erfindungsgemäß dadurch korrigiert, dass auf Grund der Segmentlänge und der Information, in welche Segmentklasse ein Vorgänger- oder Nachfolger-Segment einsortiert worden ist, korrigiert wird. In anderen Worten ausgedrückt dient die Korrektur dazu, zu kurze Segmente vollständig zu eliminieren, also mit benachbarten Segmenten zu verschmelzen, und um Segmente, die kurz sind, jedoch nicht zu kurz sind, also die eine kurze Länge haben, jedoch länger als die Minimallänge sind, noch einer besonderen Untersuchung zu unterziehen, ob sie vielleicht nicht doch noch mit einem Vorgänger-segment oder einem Nachfolgersegment verschmolzen werden können. Grundsätzlich werden erfindungsgemäß aufeinander folgende Segmente, die der gleichen Segmentklasse angehören, immer verschmolzen. Ergibt das in Fig. 7 gezeigte Szenario z. B., dass die Segmente 2 und 3 in dieselbe Segmentklasse kommen, so werden diese automatisch miteinander verschmolzen, während die Segmente in der ersten Segmentklasse, also die Segmente 7, 4, 1 voneinander beabstandet sind und daher (wenigstens zunächst) nicht verschmelzbar sind. Dies wird in Fig. 3 durch einen Block 30 angedeutet. Nunmehr wird in einem Block 31 untersucht, ob Segmente eine Segmentlänge haben, die kleiner als eine Mindestlänge ist. So existieren vorzugsweise verschiedene Mindestlängen.

Es werden relativ kurze Segmente, die kürzer als 11 Sekunden (eine erste Schwelle) sind, überhaupt nur untersucht, während später noch kürzere Segmente (eine zweite Schwelle, die kleiner als die erste ist), die kürzer als 9 Sekunden sind, untersucht werden, und später noch verbleibende Segmente, die kürzer als 6 Sekunden (eine dritte Schwelle, die kürzer als die zweite Schwelle ist) sind, wieder alternativ behandelt werden.

Bei dem bevorzugten Ausführungsbeispiel der vorliegenden Erfindung, bei dem diese gestaffelte Längenüberprüfung stattfindet, ist die Segmentlängenüberprüfung im Block 31 zunächst darauf gerichtet, dass die Segmente kürzer als 11 Sekunden gefunden werden. Für die Segmente, die länger als 11 Sekunden sind, wird keine Nachbearbeitung vorgenommen, wie es durch ein "Nein" am Block 31 erkennbar ist. Für Segmente, die kürzer als 11 Sekunden sind, wird zunächst eine Tendenzenüberprüfung (Block 32) durchgeführt. So wird zunächst untersucht, ob ein Segment auf Grund der Funktionalität der Segmentzuweisungskonflikteinrichtung 18 von Fig. 1 einen zugeordneten Trend bzw. eine zugeordnete Tendenz hat. Bei dem Beispiel von Fig. 7 wäre dies das Segment 10, das einen Trend zu dem Segment 7 bzw. einen Trend zur ersten Segmentklasse hat. Ist das zehnte Segment kürzer als 11 Sekunden, so würde bei dem in Fig. 7 gezeigten Beispiel dennoch auch auf Grund der Tendenzüberprüfung nichts geschehen, da eine Verschmelzung des betrachteten Segments nur dann stattfindet, wenn es eine Tendenz nicht zu irgendeinem Cluster, also zu irgendeiner Segmentklasse hat, sondern eine Tendenz zu einem Cluster eines angrenzenden (vorher oder nachher) Segments. Dies ist jedoch für das Segment 10 bei dem in Fig. 7 gezeigten Beispiel nicht der Fall.

Um auch die zu kurzen Segmente zu vermeiden, die keine Tendenz zu dem Cluster eines benachbarten Segments aufweisen, wird vorgegangen, wie es in den Blöcken 33a, 33b, 33c und 33d in Fig. 3 dargestellt ist. So wird an Segmenten, die länger als 9 Sekunden, jedoch kürzer als 11 Sekunden sind, nichts mehr gemacht. Sie werden belassen. In einem Block 33a wird nun jedoch für Segmente aus dem Cluster X, die kürzer als 9 Sekunden sind, und bei denen sowohl das Vorgänger-Segment als auch das Nachfolge-Segment zum Cluster Y gehören, eine Zuweisung zum Cluster Y vorgenommen, was automatisch bedeutet, dass ein solches Segment mit sowohl dem Vorgänger- als auch dem Nachfolger-Segment verschmolzen wird, so dass ein insgesamt längeres Segment entsteht, das sich aus dem betrachteten Segment sowie dem Vorgänger- als auch dem Nachfolger-Segment zusammensetzt. Somit kann durch eine nachfolgende Verschmelzung eine Zusammenfassung von zunächst getrennten Segmenten über ein zu verschmelzendes dazwischenliegendes Segment gelingen.

In einem Block 33b ist ferner ausgeführt, was mit einem Segment geschieht, das kürzer als 9 Sekunden ist, und das das einzige Segment in einer Segmentgruppe ist. So ist in der dritten Segmentklasse das Segment Nr. 10 das einzige Segment. Wäre es nun kürzer als 9 Sekunden, so wird es automatisch der Segmentklasse zugeordnet, zu der das Segment Nr. 9 gehört. Dies führt automatisch zu einer Verschmelzung des Segments 10 mit dem Segment 9. Ist das Segment 10 länger als 9 Sekunden, so wird diese Verschmelzung nicht vorgenommen.

In einem Block 33c wird dann eine Untersuchung vorgenommen für Segmente, die kürzer als 9 Sekunden sind, und die nicht das einzige Segment in einem entsprechenden Cluster X, als in einer entsprechenden Segmentgruppe sind. Sie werden einer genaueren Überprüfung unterzogen, in der eine Regelmäßigkeit in der Clusterabfolge festgestellt werden soll. Zunächst werden alle Segmente aus der Segmentgruppe X gesucht, die kürzer als die Mindestlänge sind. Im Anschluss wird für jedes dieser Segmente geprüft, ob die Vorgänger- und Nachfolge-Segmente jeweils zu einem einheitlichen Cluster gehören. Sind alle Vorgänger-Segmente aus einem einheitlichen Cluster, so werden alle zu kurzen Segmente aus dem Cluster X dem Vorgänger-Cluster zugeordnet. Sind dagegen alle Nachfolger-Segmente aus einem einheitlichen Cluster, werden die zu kurzen Segmente aus dem Cluster X jeweils dem Nachfolger-Cluster zugeordnet.

In einem Block 33d ist ausgeführt, was passiert, wenn auch diese Bedingung für Segmente nicht erfüllt ist, die kürzer als 9 Sekunden sind. In diesem Fall wird eine Neuheitswert-überprüfung durchgeführt, indem auf die Neuheitswertkurve zurückgegriffen wird, die in Fig. 9 dargestellt ist. Insbesondere wird die Neuheitskurve, die aus der Kernel-Korrelation entstanden ist, an den Stellen der betroffenen Segmentgrenzen ausgelesen, und das Maximum dieser Werte wird ermittelt. Tritt das Maximum an einem Segment anfang auf, werden die zu kurzen Segmente dem Cluster des Nachfolge-Segments zugeordnet. Tritt das Maximum an einem Segmentende auf, werden die zu kurzen Segmente dem Cluster des Vorgänger-Segments zugeordnet. Wäre das in Fig. 9 mit 90 bezeichnete Segment ein Segment, das kürzer als 9 Sekunden ist, so würde die Neuheitsüberprüfung am Anfang des Segments 90 einen höheren Neuheitswert 91 ergeben als am Ende des Segments, wobei der Neuheitswert am Ende des Segments mit 92 bezeichnet ist. Dies würde bedeuten, dass das Segment 90 dem Nachfolger-Segment zugeordnet werden würde, da der Neuheitswert zum Nachfolger-Segment geringer ist als der Neuheitswert zum Vorgänger-Segment.

Verbleiben nunmehr noch Segmente, die kürzer als 9 Sekunden sind und noch nicht verschmolzen werden durften, so wird unter diesen noch einmal eine gestaffelte Auswahl durchgeführt. Insbesondere werden nunmehr alle Segmente unter den verbleibenden Segmenten, die kürzer als 6 Sekunden sind, ausgewählt. Die Segmente, deren Länge zwischen 6 und 9 Sekunden aus dieser Gruppe sind, werden "unangetastet " zugelassen.

Die Segmente, die kürzer als 6 Sekunden sind, werden nunmehr jedoch alle der anhand der Elemente 90, 91, 92 erklärten Neuheitsprüfung unterzogen und entweder dem Vorgänger- oder dem Nachfolger-Segment zugeordnet, so dass am Ende des in Fig. 3 gezeigten Nachkorrekturalgorithmus alle zu kurzen Segmente, nämlich alle Segmente unterhalb einer Länge von 6 Sekunden, mit Vorgänger- und Nachfolger-Segmenten intelligent verschmolzen worden sind.

Dieses erfindungsgemäße Prozedere hat den Vorteil, dass keine Elimination von Teilen des Stücks durchgeführt worden ist, dass also keine einfache Eliminierung der zu kurzen Segmente durch Zu-Null-Setzen durchgeführt worden ist, sondern dass nach wie vor das gesamte komplette Musikstück durch die Gesamtheit der Segmente repräsentiert ist. Durch die Segmentierung ist daher kein Informationsverlust aufgetreten, der jedoch sein würde, wenn man z. B. als Reaktion auf die Übersegmentierung einfach alle zu kurzen Segmente "ohne Rücksicht auf Verluste" einfach eliminieren würde.

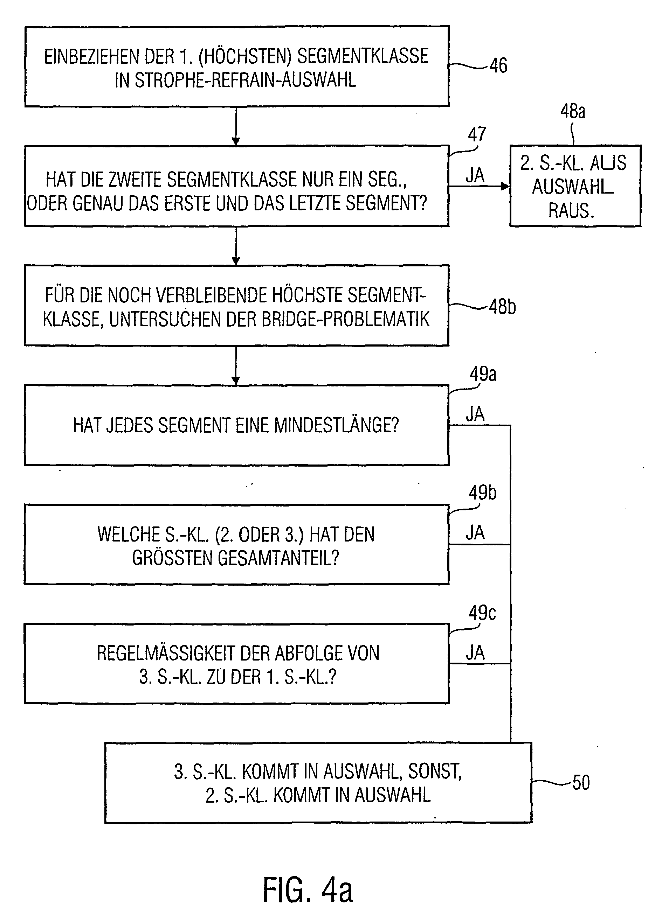

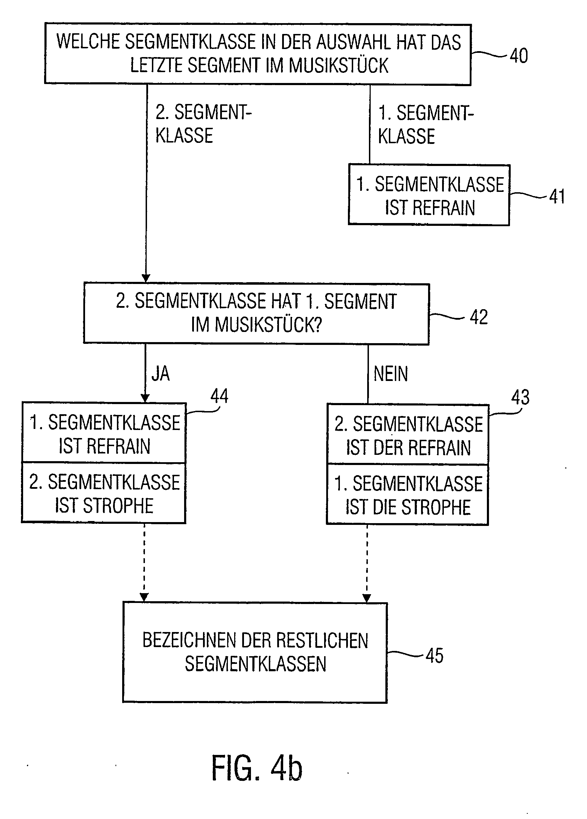

Nachfolgend wird Bezug nehmend auf Fig. 4a und Fig. 4b eine bevorzugte Implementierung der Segmentklassen-Bezeichnungseinrichtung 22 von Fig. 1 dargestellt. Erfindungsgemäß werden beim Labeling zwei Clustern die Label "Strophe" und "Refrain" zugewiesen.

Erfindungsgemäß wird nun nicht etwa ein größter Singularwert einer Singularwertzerlegung und der dazugehörige Cluster als Refrain und der Cluster für den zweitgrößten Singularwert als Strophe verwendet. Ferner wird nicht grundsätzlich davon ausgegangen, dass jedes Lied mit einer Strophe anfängt, dass also der Cluster mit dem ersten Segment der Strophencluster ist und der andere Cluster der Refraincluster ist. Statt dessen wird erfindungsgemäß der Cluster in der Kandidatenauswahl, der das letzte Segment hat, als Refrain bezeichnet, und der andere Cluster wird als Strophe bezeichnet.

So wird also für die beiden letztendlich zur Strophe-/Refrain-Auswahl bereitstehenden Cluster überprüft (40), welcher Cluster das Segment hat, das als letztes Segment der Segmente der beiden Segmentgruppen im Liedverlauf vorkommt, um denselben als Refrain zu bezeichnen.

Das letzte Segment kann das tatsächlich im Lied letzte Segment sein oder aber ein Segment, das im Lied später auftritt als alle Segmente der anderen Segmentklasse. Ist dieses Segment nicht das tatsächlich letzte Segment im Lied, so bedeutet dies, dass noch ein Outro vorliegt.

Diese Entscheidung basiert auf der Erkenntnis, dass der Refrain in den allermeisten Fällen in einem Lied hinter der letzten Strophe kommt, also direkt als letztes Segment des Liedes, wenn ein Stück z. B. mit dem Refrain ausgeblendet wird, oder als Segment vor einem Outro, das auf einen Refrain folgt und mit dem das Stück beendet wird.

Ist das letzte Segment aus der ersten Segmentgruppe, dann werden alle Segmente dieser ersten (höchstwertigen) Segmentklasse als Refrain bezeichnet, wie es durch einen Block 41 in Fig. 4b dargestellt ist. Zusätzlich werden in diesem Fall alle Segmente der anderen Segmentklasse, die zur Auswahl steht, als "Strophe" gekennzeichnet, da typischerweise von den beiden Kandidaten-Segmentklassen eine Klasse der Refrain und damit unmittelbar die andere Klasse die Strophen haben wird.

Ergibt dagegen die Untersuchung im Block 40, nämlich welche Segmentklasse in der Auswahl das letzte Segment im Musikstückverlauf hat, dass dies die zweite, also eher niederwertige Segmentklasse ist, so wird in einem Block 42 untersucht, ob die zweite Segmentklasse das erste Segment im Musikstück hat. Diese Untersuchung basiert auf der Erkenntnis, dass die Wahrscheinlichkeit sehr hoch ist, dass ein Lied mit einer Strophe, und nicht mit einem Refrain anfängt.

Wird die Frage im Block 42 mit "Nein" beantwortet, hat also die zweite Segmentklasse nicht das erste Segment im Musikstück, so wird die zweite Segmentklasse als Refrain bezeichnet, und wird die erste Segmentklasse als Strophe bezeichnet, wie es in einem Block 43 angedeutet ist. Wird dagegen die Abfrage im Block 42 mit "Ja" beantwortet, so wird entgegen der Regel die zweite Segmentgruppe als Strophe und die erste Segmentgruppe als Refrain bezeichnet, wie es in einem Block 44 angedeutet ist. Die Bezeichnung im Block 44 geschieht deswegen, da die Wahrscheinlichkeit, dass die zweite Segmentklasse dem Refrain entspricht, schon recht gering ist. Kommt nun noch die Unwahrscheinlichkeit hinzu, dass ein Musikstück mit einem Refrain eingeleitet wird, so deutet einiges auf einen Fehler im Clustering hin, z. B. dass das zuletzt betrachtete Segment fälschlicher Weise der zweiten Segmentklasse zugeordnet wurde.

In Fig. 4b wurde dargestellt, wie anhand von zwei zur Verfügung stehenden Segmentklassen die Strophe-/Refrain-Bestimmung durchgeführt worden ist. Nach dieser Strophe- /Refrain-Bestimmung können dann die restlichen Segmentklassen in einem Block 45 bezeichnet werden, wobei ein Outro gegebenenfalls die Segmentklasse sein wird, die das letzte Segment des Stücks an sich hat, während ein Intro die Segmentklasse sein wird, die das erste Segment eines Stücks an sich hat.

Nachfolgend wird anhand von Fig. 4a dargestellt, wie die beiden Segmentklassen ermittelt werden, die die Kandidaten für den in Fig. 4b gezeigten Algorithmus abgeben.

Allgemein wird im Labeling eine Zuweisung der Label "Strophe" und "Refrain" durchgeführt, wobei eine Segmentgruppe als Strophen-Segmentgruppe markiert wird, während die andere Segmentgruppe als Refrain-Segmentgruppe markiert wird. Grundsätzlich basiert dieses Konzept auf der Annahme (A1), dass die beiden Cluster (Segmentgruppen) mit den höchsten Ähnlichkeitswerten, also Cluster 1 und Cluster 2, den Refrain- und Strophenclustern entsprechen. Das von diesen beiden Clustern als letztes auftretende ist das Refrain-Cluster, wobei davon ausgegangen wird, dass eine Strophe auf einen Refrain folgt.

Die Erfahrung aus zahlreichen Tests hat gezeigt, dass Cluster 1 in den meisten Fällen dem Refrain entspricht. Für Cluster 2 wird die Annahme (A1) jedoch oftmals nicht erfüllt. Diese Situation tritt meistens dann auf, wenn es entweder noch einen dritten, sich häufig wiederholenden Teil im Stück gibt, z. B. eine Bridge, bei einer hohen Ähnlichkeit von Intro und Outro, oder aber für den nicht selten auftretenden Fall, dass ein Segment im Stück eine hohe Ähnlichkeit zum Refrain aufweist, somit auch eine hohe Gesamtähnlichkeit hat, die Ähnlichkeit zum Refrain aber gerade nicht groß genug ist, um noch zum Cluster 1 zu gehören.

Untersuchungen haben gezeigt, dass diese Situation häufig für Abwandlungen des Refrains am Ende des Stücks auftritt. Um mit möglichst hoher Sicherheit Refrain und Strophe richtig zu markieren (labeln), wird die in Fig. 4b beschriebene Segmentauswahl dahingehend verbessert, dass, wie es in Fig. 4a dargestellt wird, die beiden Kandidaten für die Strophe-Refrain-Auswahl abhängig von den in denselben vorhandenen Segmenten bestimmt wird.

Zunächst wird in einem Schritt 46 der Cluster bzw. die Segmentgruppe mit höchstem Ähnlichkeitswert (Wert der Komponente von V, die einmal ein Maximum für die zuerst bestimmte Segmentklasse, also Segment 7 bei dem Beispiel von Fig. 7, war), also die Segmentgruppe, die beim ersten Durchlauf von Fig. 1 ermittelt worden ist, in die Strophe-Refrain-Auswahl als erster Kandidat einbezogen.

Fraglich ist nunmehr, welche weitere Segmentgruppe der zweite Teilnehmer an der Strophe-Refrain-Auswahl sein wird. Der wahrscheinlichste Kandidat ist die zweithöchste Segmentklasse, also die Segmentklasse, die beim zweiten Durchlauf durch das in Fig. 1 beschriebene Konzept gefunden wird. Dies muss jedoch nicht immer so sein. Daher wird zunächst für die zweithöchste Segmentklasse (Segment 5 in Fig. 7), also Cluster 2 überprüft, ob diese Klasse nur ein einziges Segment oder genau zwei Segment hat, wobei eines der beiden Segmente das erste Segment ist und das andere Segment der beiden das letzte Segment im Lied ist (Block 47).

Wird die Frage dagegen mit "Nein" beantwortet, hat die zweithöchste Segmentklasse also z. B. wenigstens drei Segmente, oder zwei Segmente, von denen eines innerhalb des Stücks und nicht am "Rand" des Stücks ist, so bleibt die zweite Segmentklasse vorerst in der Auswahl und wird fortan als "Second Cluster" bezeichnet.

Wird die Frage im Block 47 dagegen mit "Ja" beantwortet, scheidet die zweithöchste Klasse also aus (Block 48a), so wird sie durch die Segmentklasse ersetzt, die am häufigsten im gesamten Lied vorkommt (anders ausgedrückt: die am meisten Segmente beinhaltet) und nicht der höchsten Segmentklasse (Cluster 1) entspricht. Diese Segmentklasse wird fortan als "Second Cluster" bezeichnet.

"Second Cluster" muss sich, wie es nachfolgend dargelegt wird, noch mit einer dritten Segmentklasse messen (48b), welche als "Third Cluster" bezeichnet wird, um am Ende als Kandidat den Auswahlprozess zu überstehen.

Die Segmentklasse "Third Cluster" entspricht dem Cluster, welcher am häufigsten im gesamten Lied vorkommt, jedoch weder der höchsten Segmentklasse (Cluster 1) noch der Segmentklasse "Second Cluster" entspricht, sozusagen das am nächsthäufigsten (oftmals auch gleich häufig) vorkommende Cluster nach Cluster 1 und "Second Cluster".

Hinsichtlich der so genannten Bridge-Problematik wird nun für "Third Cluster" überprüft, ob es eher in die Strophe-Refrain-Auswahl gehört als "Second Cluster" oder nicht. Dies geschieht deshalb, da "Second Cluster" und "Third Cluster" oftmals gleich oft vorkommen, eins von beiden also evtl. eine Bridge oder ein anderes wiederkehrendes Zwischenteil darstellt. Um zu gewährleisten, dass die Segmentklasse von den beiden ausgewählt wird, die am ehesten der Strophe oder dem Refrain entspricht, also nicht einer Bridge oder einem anderen Zwischenstück, werden die in den Blöcken 49a, 49b, 49c dargestellten Untersuchungen durchgeführt.

Die erste Untersuchung in Block 49a lautet dahingehend, dass untersucht wird, ob jedes Segment aus Third-Cluster eine gewisse Mindestlänge hat, wobei als Schwellwert z. B. 4% der gesamten Liedlänge bevorzugt wird. Andere Werte zwischen 2% und 10% können ebenfalls zu sinnvollen Ergebnissen führen.

In einem Block 49b wird dann untersucht, ob ThirdCluster einen größeren Gesamtanteil am Lied hat als SecondCluster. Hierzu wird die Gesamtzeit aller Segmente in ThirdCluster aufaddiert und mit der entsprechend aufaddierten Gesamtzahl aller Segmente in SecondCluster verglichen, wobei dann ThirdCluster einen größeren Gesamtanteil am Lied als SecondCluster hat, wenn die aufaddierten Segmente in ThirdCluster einen größeren Wert ergeben als die aufaddierten Segmente in SecondCluster.

In dem Block 49c wird schließlich überprüft, ob der Abstand der Segmente aus ThirdCluster zu den Segmenten aus Cluster 1, also dem häufigsten Cluster konstant sind, d. h. ob eine Regelmäßigkeit in der Abfolge ersichtlich ist.

Sind alle diese drei Bedingungen mit "Ja" beantwortet, so kommt ThirdCluster in die Strophe-Refrain-Auswahl. Ist dagegen wenigstens eine dieser Bedingungen nicht erfüllt, so kommt ThirdCluster nicht in die Strophe-Refrain-Auswahl. Statt dessen kommt SecondCluster in die Strophe-Refrain-Auswahl, wie es durch einen Block 50 in Fig. 4a dargestellt ist. Damit ist die "Kandidatensuche" für die Strophe-Refrain-Auswahl beendet, und es wird der in Fig. 4b gezeigte Algorithmus gestartet, bei dem am Ende feststeht, welche Segmentklasse die Strophen umfasst, und welche Segmentklasse den Refrain umfasst.

An dieser Stelle sei darauf hingewiesen, dass die drei Bedingungen in den Blöcken 49a, 49b, 49c alternativ auch gewichtet werden könnten, so dass z. B. eine Nein-Antwort im Block 49a dann "überstimmt" wird, wenn sowohl die Abfrage im Block 49b als auch die Abfrage im Block 49c mit "Ja" beantwortet werden. Alternativ könnte auch eine Bedingung der drei Bedingungen hervorgehoben werden, so dass z. B. nur untersucht wird, ob es die Regelmäßigkeit der Abfolge zwischen der dritten Segmentklasse und der ersten Segmentklasse gibt, während die Abfragen in den Blöcken 49a und 49b nicht durchgeführt werden oder nur dann durchgeführt werden, wenn die Abfrage im Block 49c mit "Nein" beantwortet wird, jedoch z. B. ein relativ großer Gesamtanteil im Block 49b und relativ große Mindestmengen im Block 49a ermittelt werden.

Alternative Kombinationen sind ebenfalls möglich, wobei für eine Low-Level-Untersuchung auch nur die Abfrage eines der Blöcke 49a, 49b, 49c für bestimmte Implementierungen ausreichend sein wird.

Nachfolgend werden beispielhafte Implementierungen des Blocks 526 zum Durchführen einer Music-Summary dargelegt. So existieren verschiedene Möglichkeiten, was als Music Summary abgespeichert werden kann. Zwei davon werden nachfolgend beschrieben, nämlich die Möglichkeit mit dem Titel "Refrain" und die Möglichkeit mit dem Titel "Medley".

Die Refrain-Möglichkeit besteht darin, eine Version des Refrains als Summary zu wählen. Hierbei wird versucht, eine Ausführung des Refrains zu wählen, die möglichst zwischen 20 und 30 Sekunden lang ist. Ist ein Segment mit einer solchen Länge im Refrain-Cluster nicht enthalten, so wird eine Version gewählt, die eine möglichst geringe Abweichung zu einer Länge von 25 Sekunden hat. Ist der gewählte Refrain länger als 30 Sekunden, wird er bei diesem Ausführungsbeispiel über 30 Sekunden ausgeblendet und ist er kürzer als 20 Sekunden, so wird er mit dem darauf folgenden Segment auf 30 Sekunden verlängert.

Das Abspeichern eines Medleys für die zweite Möglichkeit entspricht noch eher einer tatsächlichen Zusammenfassung eines Musikstücks. Hierbei werden ein Ausschnitt der Strophe, ein Ausschnitt des Refrains und ein Ausschnitt eines dritten Segments in ihrer tatsächlichen chronologischen Reihenfolge als Medley konstruiert. Das dritte Segment wird aus einem Cluster ausgewählt, das den größten Gesamtanteil am Lied hat und nicht Strophe oder Refrain ist.

Mit folgender Priorität wird nach der geeignetsten Abfolge der Segmente gesucht:

- "drittes Segment"-Strophe-Refrain;

- Strophe-Refrain-"drittes Segment"; oder

- Strophe-"drittes Segment"-Refrain.

Die gewählten Segmente werden nicht in ihrer vollen Länge in des Medley eingebaut. Die Länge ist vorzugsweise auf feste 10 Sekunden pro Segment festgelegt, damit insgesamt wieder eine Summary von 30 Sekunden entsteht. Alternative Werte sind jedoch ebenfalls ohne weiteres realisierbar.

Vorzugsweise wird zur Rechenzeiteinsparung nach der Merkmalsextraktion im Block 502 bzw. nach dem Block 508 eine Gruppierung mehrerer Merkmalsvektoren im Block 510 durchgeführt, indem ein Mittelwert über die gruppierten Merkmalsvektoren gebildet wird. Die Gruppierung kann im nächsten Verarbeitungsschritt, der Berechnung der Ähnlichkeitsmatrix, Rechenzeit einsparen. Zur Berechnung der Ähnlichkeitsmatrix wird zwischen allen möglichen Kombinationen von je zwei Merkmalsvektoren eine Distanz ermittelt. Daraus ergeben sich bei n Vektoren über das gesamte Stück n x n Berechnungen. Ein Gruppierungsfaktor g gibt an, wie viele aufeinander folgende Merkmalsvektoren über die Mittelwertbildung zu einem Vektor gruppiert werden. Dadurch kann die Anzahl der Berechnungen reduziert werden.

Die Gruppierung ist auch eine Art von Rauschunterdrückung, bei der kleine Änderungen in der Merkmalsausprägung von aufeinander folgenden Vektoren im Mittel kompensiert werden. Diese Eigenschaft hat eine positive Auswirkung auf das Auffinden von großen Liedstrukturen.

Das erfindungsgemäße Konzept ermöglicht es, mittels eines speziellen Music-Players durch die berechneten Segmente zu navigieren und gezielt einzelne Segmente anzuwählen, so dass ein Konsument in einem Musikladen durch beispielsweise Drücken einer bestimmten Taste oder durch Aktivieren eines bestimmten Software-Befehls ohne weiteres sofort zum Refrain eines Stücks springen kann, um festzustellen, ob der Refrain ihm gefällt, um dann, vielleicht noch eine Strophe anzuhören, damit der Konsument schließlich eine Kaufentscheidung treffen kann. Damit ist es einem Kaufinteressenten komfortabel möglich, von einem Stück genau das zu hören, was ihn besonders interessiert, während er sich z. B. das Solo oder die Bridge dann tatsächlich für den Hörgenuss zu Hause aufsparen kann.

Alternativ ist das erfindungsgemäße Konzept auch für einen Musikladen von großem Vorteil, da der Kunde gezielt und damit auch schnell reinhören und letztendlich kaufen kann, so dass die Kunden nicht lange auf ein Reinhören warten müssen, sondern ebenfalls schnell an die Reihe kommen. Dies liegt daran, dass ein Benutzer nicht ständig hin- und herspulen muss, sondern gezielt und schnell sämtliche Informationen des Stücks erhält, die er auch haben möchte.

Ferner sei auf einen wesentlichen Vorteil des erfindungsgemäßen Konzepts hingewiesen, nämlich dass insbesondere auf Grund der Nachkorrektur der Segmentierung keine Informationen des Stücks verloren gehen. So werden zwar alle Segmente, die vorzugsweise kürzer als 6 Sekunden sind, mit dem Vorgänger- oder Nachfolger-Segment verschmolzen. Allerdings werden keine Segmente, so kurz sie auch sind, eliminiert. Dies hat den Vorteil, dass der Benutzer prinzipiell alles im Stück anhören kann, so dass ein zwar kurzes aber einem Benutzer doch sehr gut gefallendes markantes Stück, das bei einer Segmentierungs-Nachkorrektur weggefallen wäre, die tatsächlich einen Abschnitt des Stücks komplett eliminiert hätte, dennoch dem Benutzer zur Verfügung steht, damit er vielleicht gerade aufgrund des kurzen markanten Stücks eine wohl überlegte Kaufentscheidung treffen kann.

Die vorliegende Erfindung ist jedoch auch in anderen Anwendungsszenarien anwendbar, beispielsweise beim Werbe-Monitoring, also dort, wo ein Werbekunde überprüfen möchte, ob das Audiostück, für das er Werbezeit gekauft hat, auch tatsächlich über die gesamte Länge abgespielt worden ist. Ein Audiostück kann beispielsweise Musiksegmente, Sprechersegmente, und Geräuschsegmente umfassen. Der Segmentierungsalgorithmus, also die Segmentierung und nachfolgende Einordnung in Segmentgruppen ermöglicht dann eine schnelle und wesentlich weniger aufwendige Überprüfung als ein kompletter Sample-weiser Vergleich. Die effiziente Überprüfung würde einfach in einer Segmentklassen-Statistik bestehen, also einem Vergleich, wie viel Segmentklassen gefunden worden sind, und wie viel Segmente in den einzelnen Segmentklassen sind, mit einer Vorgabe aufgrund des idealen Wexbestücks. Damit ist es einem Werbekunden ohne weiteres möglich, zu erkennen, ob ein Rundfunksender oder Fernsehsender tatsächlich alle Hauptteile (Abschnitte) des Werbesignals ausgestrahlt hat oder nicht.

Die vorliegende Erfindung ist ferner dahingehend von Vorteil, dass sie zur Recherche in großen Musikdatenbanken eingesetzt werden kann, um beispielsweise nur die Refrains von vielen Musikstücken durchzuhören, um danach eine Musikprogrammauswahl durchzuführen. In diesem Fall würden nur einzelne Segmente aus der mit "Refrain" markierten Segmentklasse von vielen verschiedenen Stücken ausgewählt werden und von einem Programmanbieter bereitgestellt werden. Alternativ könnte auch ein Interesse dahingehend bestehen, von einem Interpreten alle z. B. Gitarrensolos miteinander zu vergleichen. Erfindungsgemäß können diese ebenfalls ohne weiteres bereitgestellt werden, indem immer eines oder mehrere Segmente (falls vorhanden) in der mit "Solo" bezeichneten Segmentklasse aus einer großen Anzahl von Musikstücken z. B. zusammengefügt und als ein File bereitgestellt werden.

Wieder andere Anwendungsmöglichkeiten bestehen darin, aus verschiedenen Audiostücken Strophen und Refrains zu mischen, was insbesondere für DJs von Interesse sein wird und völlig neue Möglichkeiten der kreativen Musiksynthese eröffnet, welche einfach und vor allem automatisch zielgenau durchgeführt werden können. So ist das erfindungsgemäße Konzept ohne weiteres automatisierbar, da es an keiner Stelle eine Benutzerintervention erfordert. Dies bedeutet, dass Nutzer des erfindungsgemäßen Konzepts keineswegs eine besondere Ausbildung benötigen, außer z. B. eine übliche Geschicktheit im Umgang mit normalen Software-Benutzeroberflächen.

Je nach den praktischen Gegebenheiten kann das erfindungsgemäße Konzept in Hardware oder in Software implementiert werden. Die Implementierung kann auf einem digitalen Speichermedium, insbesondere einer Diskette oder CD mit elektronisch auslesbaren Steuersignalen erfolgen, die so mit einem programmierbaren Computersystem zusammenwirken können, dass das entsprechende Verfahren ausgeführt wird. Allgemein besteht die Erfindung somit auch in einem Computerprogrammprodukt mit einem auf einem maschinenlesbaren Träger gespeicherten Programmcode zur Durchführung des erfindungsgemäßen Verfahrens, wenn das Computerprogrammprodukt auf einem Rechner abläuft. In anderen Worten ausgedrückt stellt die Erfindung somit ein Computerprogramm mit einem Programmcode zur Durchführen des Verfahrens dar, wenn das Computerprogramm auf einem Computer abläuft.

**Patentansprüche**

1. Vorrichtung zum Bezeichnen von verschiedenen Segmentklassen, denen zeitliche Segmente auf Grund von Segmentähnlichkeiten zugewiesen sind, wobei die Segmente ein Audiostück darstellen, das in in dem Audiostück wiederholt auftretende Hauptteile gegliedert ist, mit folgenden Merkmalen:

einer Einrichtung (10, 12, 14) zum Bereitstellen einer Darstellung des Audiostücks, bei der die Segmente des Audiostücks zu verschiedenen Segmentklassen zugewiesen sind, wobei jeweils eine Segmentklasse einem Hauptteil zuordenbar ist; und
einer Segmentklassen-Bezeichnungseinrichtung (22), die ausgebildet ist,

um für eine erste Kandidaten-Segmentklasse erster Ordnung und für eine zweite Kandidaten-Segmentklasse zweiter Ordnung die Hauptteileauswahl durchzuführen, wobei die zweite Ordnung im Hinblick auf eine Ähnlichkeit von Segmenten der zweiten Kandidaten-Segmentklasse zu Segmenten des Audiostücks niedriger als die erste Ordnung ist,
um zu überprüfen, ob die Kandidaten-Segmentklasse erster Ordnung das zeitlich spätere Segment in dem Audiosignal hat, und
um die Kandidaten-Segmentklasse erster Ordnung, wenn sie das zeitlich spätere Segment hat, als Refrain-Segmentklasse zu bezeichnen, und die Kandidaten-Segmentklasse zweiter Ordnung als Strophe-Segmentklasse zu bezeichnen (41).

2. Vorrichtung nach Anspruch 1, bei der das Audiostück ein Musikstück ist.

3. Vorrichtung nach einem der vorhergehenden Ansprüche, bei der eine Kandidaten-Segmentklasse eine höhere Ordnung hat, wenn ein Ähnlichkeitswert der Kandidaten-Segmentklasse darauf hinweist, dass ein Segment in der Kandidaten-Segmentklasse zu allen Segmenten in dem Audiostück insgesamt ähnlicher ist als ein Segment der anderen Kandidaten-Segmentklasse.

4. Vorrichtung nach einem der vorhergehenden Ansprüche, bei der die Segmentklassen-Bezeichnungseinrichtung ausgebildet ist, um einen Ähnlichkeitswert für ein Segment durch Addition aller Werte in einer Zeile oder Spalte einer Ähnlichkeitsmatrix zu ermitteln, wobei die Zeile oder Spalte dem Segment zugeordnet ist.

5. Vorrichtung nach Anspruch 4 oder 5, bei der die Einrichtung zum Bereitstellen ausgebildet ist, um auf Grund einer Ähnlichkeitsmatrix eine iterative Segmentklassenzuweisung durchzuführen, wobei jeder Zeile oder Spalte der Ähnlichkeitsmatrix ein Segment zugeordnet ist, und wobei in einem ersten Iterationsschritt für eine Zeile oder Spalte der Ähnlichkeitsmatrix, die den höchsten Ähnlichkeitswert hat, eine Segmentzuweisung zu einer Segmentklasse erster Ordnung durchgeführt wird, wobei dann für Segmente, die zugeordnet worden sind, entsprechende Zeilen oder Spalten der Ähnlichkeitsmatrix für eine weitere Zuweisung ignoriert werden, und wobei dann in einem zweiten Iterationsschritt für eine noch verbleibende Zeile oder Spalte der Ähnlichkeitsmatrix, die den höchsten Ähnlichkeitswert hat, eine Segmentzuweisung zu einer Segmentklasse zweiter Ordnung durchgeführt wird.

6. Vorrichtung nach einem der vorhergehenden Ansprüche, bei der die Segmentklassen-Bezeichnungseinrichtung (22) ausgebildet ist, um zu untersuchen, welche der Kandidaten-Segmentklassen das zeitlich spätere Segment in dem Audiosignal hat, um dann, wenn die zweite Kandidaten-Segmentklasse das zeitlich spätere Segment hat, ferner zu untersuchen, ob die zweite Segmentklasse ein früheres Segment in dem Musiksignal als die andere Kandidaten-Segmentklasse hat (42).

7. Vorrichtung nach Anspruch 6, bei der die Segmentklassen-Bezeichnungseinrichtung (22) ausgebildet ist, um dann, wenn die zweite Kandidaten-Segmentklasse das frühere Segment in dem Musikstück hat, die erste Kandidaten-Segmentklasse als Refrain-Segmentklasse und die zweite Kandidaten-Segmentklasse als Strophe-Segmentklasse zu bezeichnen (44).

8. Vorrichtung nach Anspruch 6, bei der die Segmentklassen-Bezeichnungseinrichtung (22) ausgebildet ist, um dann, wenn die erste Kandidaten-Segmentklasse das zeitlich frühere Segment in dem Musikstück hat, die erste Kandidaten-Segmentklasse als Strophen-Segmentklasse und die zweite Kandidaten-Segmentklasse als Refrain-Segmentklasse zu bezeichnen (43).

9. Vorrichtung nach einem der vorhergehenden Ansprüche, bei der die Segmentklassen-Bezeichnungseinrichtung (22) ferner ausgebildet ist, um als erste Kandidaten-Segmentklasse eine erste Segmentklasse mit einer höchsten Ordnung zu verwenden (46), und um eine Bestimmung (47, 48a, 48b, 49a, 49b, 49c) durchzuführen, um eine zweite Kandidaten-Segmentklasse gleich der zweiten Segmentklasse mit einer niedrigeren Ordnung zu ermitteln.

10. Vorrichtung nach Anspruch 9, bei der die Segmentklassen-Bezeichnungseinrichtung (22) ausgebildet ist, um in der Bestimmung zu untersuchen (47), ob die zweite Segmentklasse genau ein Segment hat und ausschließlich das erste oder letzte Segment des Audiosignals hat, um dann, wenn dies der Fall ist, die Segmentklasse zweithöchster Ordnung nicht als zweite Kandidaten-Segmentklasse zu verwenden.

11. Vorrichtung nach Anspruch 10, bei der die Segmentklassen-Bezeichnungseinrichtung (22) ausgebildet ist, um in der Bestimmung zu untersuchen (47), ob die zweite Segmentklasse mehr als ein Segment hat und nicht ausschließlich das erste oder letzte Segment des Audiosignals hat, um dann, wenn dies der Fall ist, eine dritte Segmentklasse zu untersuchen (48b, 49a, 49b, 49c), um als zweite Kandidaten-Segmentklasse die dritte Segmentklasse oder die Segmentklasse zweiter Ordnung zu verwenden (50).

12. Vorrichtung nach Anspruch 11, bei der die Segmentklassen-Bezeichnungseinrichtung (22) ausgebildet ist, um für die dritte Segmentklasse wenigstens eine der folgenden Untersuchungen durchzuführen,
wobei eine erste Untersuchung (49a) darin besteht, festzustellen, ob jedes Segment der dritten Segmentklasse eine Mindestlänge hat,
wobei eine zweite Untersuchung (49b) darin besteht, festzustellen, welche Segmentklasse aus der zweiten und der dritten Segmentklasse einen größeren Gesamtanteil an dem Audiostück hat, und
wobei eine dritte Untersuchung (49c) darin besteht, festzustellen, ob eine Regelmäßigkeit der Abfolge von Segmenten in der dritten Segmentklasse zu Segmenten in der ersten Segmentklasse existiert,
wobei die Segmentklassen-Bezeichnungseinrichtung (22) ferner ausgebildet ist, um auf der Basis von wenigstens einer der Untersuchungen die zweite Segmentklasse oder die dritte Segmentklasse als die zweite Kandidaten-Segmentklasse zu verwenden (50).

13. Vorrichtung nach Anspruch 12, bei der die Segmentklassen-Bezeichnungseinrichtung (22) ausgebildet ist, um die dritte Segmentklasse als die zweite Kandidaten-Segment klasse zu verwenden (50), wenn alle drei Untersuchungen mit "Ja" beantwortet sind, und um sonst die zweite Segmentklasse als die zweite Kandidaten-Segmentklasse zu verwenden.

14. Vorrichtung nach einem der vorhergehenden Ansprüche, bei der die Einrichtung zum Bereitstellen folgende Merkmale aufweist:

eine Einrichtung (10) zum Bereitstellen einer Ähnlichkeitsdarstellung für die Segmente, wobei die Ähnlichkeitsdarstellung für jedes Segment eine zugeordnete Mehrzahl von Ähnlichkeitswerten aufweist, wobei die Ähnlichkeitswerte angeben, wie ähnlich das Segment zu jedem anderen Segment des Audiostücks ist;
eine Einrichtung (12) zum Berechnen eines Ähnlichkeits-Schwellwerts für ein Segment unter Verwendung der Mehrzahl der Ähnlichkeitswerte, die dem Segment zugeordnet sind; und
eine Einrichtung (14) zum Zuweisen eines Segments zu einer Segmentklasse, wenn der Ähnlichkeitswert des Segments eine vorbestimmte Bedingung bezüglich des Ähnlichkeits-Schwellwerts erfüllt.

15. Vorrichtung nach Anspruch 14, die ferner folgendes Merkmal aufweist:

eine Segmentauswahleinrichtung (16) zum Ermitteln eines Extrem-Segments, dessen zugeordnete Mehrzahl von Ähnlichkeitswerten zusammen betrachtet ein Extremum aufweist,

wobei die Einrichtung (12) zum Berechnen ausgebildet ist, um für das Extremsegment den Ähnlichkeits-Schwellwert zu berechnen, und
wobei die Einrichtung (14) zum Zuweisen ausgebildet ist, um die Segmentklasse mit einem Hinweis auf das Extremsegment zu kennzeichnen.

**16.** Vorrichtung nach Anspruch 14 oder 15, bei der die Einrichtung (14) zum Zuweisen ausgebildet ist, um ein Segment, das die vorbestimmte Bedingung bezüglich des Ähnlichkeits-Schwellwerts nicht erfüllt, der Segmentklasse nicht zuzuordnen, sondern für eine Zuordnung zu einer anderen Segmentklasse zu belassen, und
wobei die Einrichtung (14) zum Zuweisen ausgebildet ist, um für ein zugeordnetes Segment den Ähnlichkeitswert des Segments bei einer Zuweisung zu einer anderen Segmentklasse nicht mehr zu berücksichtigen.

**17.** Vorrichtung nach einem der Ansprüche 14 bis 16, bei der die Einrichtung (12) zum Berechnen des Ähnlichkeits-Schwellwerts in einem späteren Durchgang ausgebildet ist, um nach einer früheren Zuweisung einer Segmentklasse Ähnlichkeitswerte für früher zugewiesene Segmente in der Mehrzahl von Ähnlichkeitswerten zu ignorieren, und
bei der die Einrichtung (14) zum Zuweisen ausgebildet ist, um in einem späteren Durchgang eine Zuweisung zu einer anderen Segmentklasse als der Segmentklasse bei einem früheren Durchgang auszuführen.

**18.** Verfahren zum Bezeichnen von verschiedenen Segme ntklassen, denen zeitliche Segmente auf Grund von Segmentähnlichkeiten zugewiesen sind, wobei die Segmente ein Audiostück darstellen, das in in dem Audiostück wiederholt auftretende Hauptteile gegliedert ist, mit folgenden Schritten:

Bereitstellen (10, 12, 14) einer Darstellung des Audiostücks, bei der die Segmente des Audiostücks zu verschiedenen Segmentklassen zugewiesen sind, wobei jeweils eine Segmentklasse einem Hauptteil zuordenbar ist; und
Bezeichnen (22) der Segmentklassen,

indem für eine erste Kandidaten-Segmentklasse erster Ordnung und für eine zweite Kandidaten-Segmentklasse zweiter Ordnung die Hauptteileauswahl durchgeführt wird, wobei die zweite Ordnung im Hinblick auf eine Ähnlichkeit von Segmenten der zweiten Kandidaten-Segmentklasse zu Segmenten des Audiostücks niedriger als die erste Ordnung ist,
indem überprüft wird, ob die Kandidaten-Segmentklasse erster Ordnung das zeitlich spätere Segment in dem Audiosignal hat, und
indem die Kandidaten-Segmentklasse erster Ordnung, wenn sie das zeitlich spätere Segment hat, als Refrain-Segmentklasse bezeichnet wird, und die Kandidaten-Segmenklasse zweiter Ordnung als Strophe-Segmentklasse bezeichnet wird (41).

**19.** Computer-Programm zum Ausführen eines Verfahrens zum Bezeichnen von verschiedenen Segmentklassen gemäß Patentanspruch 18, wenn das Computer-Programm auf einem Computer abläuft.

**Claims**

**1.** Apparatus for designating various segment classes to which temporal segments are assigned due to segment similarities, wherein the segments represent an audio piece, which is structured into main parts repeatedly occurring in the audio piece, comprising:

a means (10, 12, 14) for providing a representation of the audio piece, in which the segments of the audio piece are assigned to various segment classes, wherein one segment class each can be associated with a main part; and
a segment class designation means (22) formed to

perform the main part selection for a first first-order candidate segment class and for a second second-order candidate segment class, wherein the second order is lower than the first order regarding a similarity of segments of the second candidate segment class to segments of the audio piece,
examine whether the first-order candidate segment class has the temporally later segment in the audio signal, and
designate the first-order candidate segment class as refrain segment class when it has the temporally later segment and to designate (41) the second-order candidate segment class as stanza segment class.

**2.** Apparatus of claim 1, wherein the audio piece is a piece of music.

**3.** Apparatus of one of the preceding claims, wherein a candidate segment class has a higher order when a similarity value of the candidate segment class indicates that a segment in the candidate segment class is more similar to all segments in the audio piece altogether than a segment of the other candidate segment class.

4. Apparatus of one of the preceding claims, wherein the segment class designation means is formed to determine a similarity value for a segment by addition of all values in a row or column of a similarity matrix, wherein the row or column is associated with the segment.

5. Apparatus of claim 4 or 5, wherein the means for providing is formed to perform an iterative segment class assignment due to a similarity matrix, wherein a segment is associated with each row or column of the similarity matrix, and wherein in a first iteration step, for a row or column of the similarity matrix having the highest similarity value, a segment assignment to a first-order segment class is performed, wherein then for segments that have been associated, corresponding rows or columns of the similarity matrix are ignored for further assignment, and wherein then in a second iteration step, for a still remaining row or column of the similarity matrix that has the highest similarity value, a segment assignment to a second-order segment class is performed.

6. Apparatus of one of the preceding claims, wherein the segment class designation means (22) is formed to examine which of the candidate segment classes has the temporally later segment in the audio signal, in order to then further examine whether the second segment class has an earlier segment in the music signal than the other candidate segment class (42), when the second candidate segment class has the temporally later segment.

7. Apparatus of claim 6, wherein the segment class designation means (22) is formed to designate (44) the first candidate segment class as refrain segment class and the second candidate segment class as stanza segment class, when the second candidate segment class has the earlier.segment in the piece of music.

8. Apparatus of claim 6, wherein the segment class designation means (22) is formed to designate (43) the first candidate segment class as stanza segment class and the second candidate segment class as refrain segment class, when the first candidate segment class has the temporally earlier segment in the piece of music.

9. Apparatus of one of the preceding claims, wherein the segment class designation means (22) is further formed to use (46) a first segment class with a highest order as first candidate segment class, and to perform a determination (47, 48a, 48b, 49a, 49b, 49c) to determine a second candidate segment class equal to the second segment class with a lower order.

10. Apparatus of claim 9, wherein the segment class designation means (22) is formed to examine (47) in the determination whether the second segment class has exactly one segment and has exclusively the first or last segment of the audio signal, in order not to use the second-highest-order segment class as second candidate segment class when this is the case.

11. Apparatus of claim 10, wherein the segment class designation means (22) is formed to examine (47) in the determination whether the second segment class has more than one segment and has not exclusively the first or last segment of the audio signal, in order to then examine (48b, 49a, 49b, 49c) a third segment class when this is the case, to use (50) the third segment class or the second-order segment class as second candidate segment class.

12. Apparatus of claim 11, wherein the segment class designation means (22) is formed to perform at least one of the following examinations for the third segment class,
wherein a first examination (49a) consists in ascertaining whether each segment of the third segment class has a minimum length,
wherein a second examination (49b) consists in ascertaining which segment class out of the second and the third segment class has a larger overall portion of the audio piece, and
wherein a third examination (49c) consists in ascertaining whether a regularity of the sequence of segments in the third segment class to segments in the first segment class exists,
wherein the segment class designation means (22) is further formed to use (50) the second segment class or the third segment class as the second candidate segment class on the basis of at least one of the examinations.

13. Apparatus of claim 12, wherein the segment class designation means (22) is formed to use (50) the third segment class as the second candidate segment class when all three examinations are answered with "yes", and otherwise to use the second segment class as the second candidate segment class.

14. Apparatus of one of the preceding claims, wherein the means for providing comprises:

# EP 1 774 527 B1

a means (10) for providing a similarity representation for the segments, wherein the similarity representation comprises an associated plurality of similarity values for each segment, wherein the similarity values indicate how similar the segment is to each other segment of the audio piece;

a means (12) for calculating a similarity threshold value for a segment using the plurality of similarity values associated with the segment; and

a means (14) for assigning a segment to a segment class when the similarity value of the segment meets a predetermined condition with respect to the similarity threshold value.

**15.** Apparatus of claim 14, further comprising:

a segment selection means (16) for determining an extreme segment, the associated plurality of similarity values, considered together, of which comprises an extreme,

wherein the means (12) for calculating is formed to calculate the similarity threshold value for the extreme segment, and

wherein the means (14) for assigning is formed to characterize the segment class with an indication to the extreme segment.

**16.** Apparatus of claim 14 or 15, wherein the means (14) for assigning is formed not to associate a segment not meeting the predetermined condition with respect to the similarity threshold value with the segment class, but to leave it for an association with another segment class, and

wherein the means (14) for assigning is formed to no longer take into account, for an associated segment, the similarity value of the segment in an assignment to another segment class.

**17.** Apparatus of one of claims 14 to 16, wherein the means (12) for calculating the similarity threshold value in a later pass is formed to ignore similarity values for segments assigned earlier in the plurality of similarity values after an earlier assignment of a segment class, and

wherein the means (14) for assigning is formed to execute, in a later pass, an assignment to another segment class than the segment class in an earlier pass.

**18.** Method for designating various segment classes to which temporal segments are assigned due to segment similarities, wherein the segments represent an audio piece that is structured into main parts repeatedly occurring in the audio piece, comprising:

providing (10, 12, 14) a representation of the audio piece, in which the segments of the audio piece are assigned to various segment classes, wherein one segment class each can be associated with a main part, and designating (22) the segment classes

by performing the main part selection for a first first-order candidate segment class and for a second second-order candidate segment class, wherein the second order is lower than the first order regarding a similarity of segments of the second candidate segment class to segments of the audio piece,

by examining whether the first-order candidate segment class has the temporally later segment in the audio signal, and

by designating the first-order candidate segment class as refrain segment class when it has the temporally later segment, and designating (41) the second-order candidate segment class as stanza segment class.

**19.** Computer program for executing a method of claim 18 for designating various segment classes, when the computer program runs on a computer.

## Revendications

**1.** Dispositif pour désigner différentes classes de segments auxquelles sont attribués des segments dans le temps sur base de similitudes de segment, les segments représentant un morceau audio qui est subdivisé en parties principales se présentant de manière répétée dans le morceau audio, aux caractéristiques suivantes:

un moyen (10, 12, 14) destiné à mettre à disposition une représentation du morceau audio dans laquelle les segments du morceau audio sont attribués à différentes classes de segments, une classe de segments pouvant chaque fois être associée à une partie principale; et
un moyen de désignation de classes de segments (22) qui est réalisé de manière à

effectuer la sélection de parties principales pour une première classe de segments candidate de premier ordre et pour une deuxième classe de segments candidate de deuxième ordre, le deuxième ordre étant, en ce qui concerne une similitude entre des segments de la deuxième classe de segments candidate et des segments du morceau audio, inférieur au premier ordre,
vérifier si la classe de segments candidate de premier ordre présente le segment ultérieur dans le temps dans le signal audio, et
désigner la classe de segments candidate de premier ordre, lorsqu'elle présente le segment ultérieur dans le temps, comme classe de segments de refrain, et pour désigner la classe de segments candidate de deuxième ordre comme classe de segments de strophe (41).

2. Dispositif selon la revendication 1, dans lequel le morceau audio est un morceau de musique.

3. Dispositif selon l'une des revendications précédentes, dans lequel une classe de segments candidate a un ordre supérieur lorsqu'une valeur de similitude de la classe de segments candidate indique qu'un segment dans la classe de segments candidate est dans l'ensemble plus similaire à tous les segments dans le morceau audio qu'un segment de l'autre classe de segments candidate.

4. Dispositif selon l'une des revendications précédentes, dans lequel le moyen de désignation de classes de segments est réalisé de manière à déterminer une valeur de similitude pour un segment par addition de toutes les valeurs dans une rangée ou une colonne d'une matrice de similitude, la rangée ou la colonne étant associée au segment.

5. Dispositif selon la revendication 4 ou 5, dans lequel le moyen destiné à mettre à disposition est réalisé de manière à effectuer une attribution de classes de segments sur base d'une matrice de similitude, à chaque rangée ou colonne de la matrice de similitude étant associé un segment, et dans une première étape d'itération étant effectuée, pour une rangée ou colonne de la matrice de similitude ayant la valeur de similitude la plus élevée, une attribution de segment à une classe de segments de premier ordre, pour les segments qui ont été associés étant alors ignorées pour une autre attribution les rangées ou colonnes correspondantes de la de la matrice de similitude, et dans une deuxième étape d'itération étant alors effectuée, pour une rangée ou colonne encore restante de la matrice de similitude ayant la valeur de similitude la plus élevée, une attribution de segment à une classe de segments de deuxième ordre.

6. Dispositif selon l'une des revendications précédentes, dans lequel le moyen de désignation de classes de segments (22) est réalisé de manière à examiner celle parmi les classes de segments candidates qui présente le segment ultérieur dans le temps dans le signal audio, pour examiner ensuite, lorsque la deuxième classe de segments candidate présente le segment ultérieur dans le temps, par ailleurs si la deuxième classe de segments présente un segment dans le signal musical antérieur à celui de l'autre classe de segments candidate (42).

7. Dispositif selon la revendication 6, dans lequel le moyen de désignation de classes de segments (22) est réalisé de manière à désigner, lorsque la deuxième classe de segments candidate présente le segment antérieur dans le morceau de musique, la première classe de segments candidate comme classe de segments de refrain et la deuxième classe de segments candidate comme classe de segments de strophe (44).

8. Dispositif selon la revendication 6, dans lequel le moyen de désignation de classes de segments (22) est réalisé de manière à désigner, lorsque la première classe de segments candidate présente le segment antérieur dans le morceau de musique, la première classe de segments candidate comme classe de segments de strophe et la deuxième classe de segments candidate comme classe de segments de refrain (43).

9. Dispositif selon l'une des revendications précédentes, dans lequel le moyen de désignation de classes de segments (22) est par ailleurs réalisé de manière à utiliser comme première classe de segments candidate une première classe de segments d'un ordre supérieur (46), et à effectuer une détermination (47, 48a, 48b, 49a, 49b, 49c), pour déterminer une deuxième classe de segments candidate égale à la deuxième classe de segments d'un ordre inférieur.

10. Dispositif selon la revendication 9, dans lequel le moyen de désignation de classes de segments (22) est réalisé de manière à examiner (47) lors de la détermination si la deuxième classe de segments présente exactement un segment et présente exclusivement le premier ou le dernier segment du signal audio, pour ne pas utiliser, lorsque cela est le cas, la classe de segments du deuxième ordre le plus élevé comme deuxième classe de segments candidate.

11. Dispositif selon la revendication 10, dans lequel le moyen de désignation de classes de segments (22) est réalisé de manière à examiner (47) lors de la détermination si la deuxième classe de segments présente plus d'un segment et ne présente pas exclusivement le premier ou le dernier segment du signal audio, pour examiner alors, lorsque cela est le cas, une troisième classe de segments (48b, 49a, Λ9b, 49c), pour utiliser comme deuxième classe de segments candidate la troisième classe de segments ou la classe de segments de deuxième ordre (50).

12. Dispositif selon la revendication 11, dans lequel le moyen de désignation de classes de segments (22) est réalisé de manière à effectuer pour la troisième classe de segments au moins l'un des examens suivants,

un premier examen (49a) consistant à constater si chaque segment de la troisième classe de segments a une longueur minimale,
un deuxième examen (49b) consistant à constater la classe de segments parmi la deuxième et le troisième classe de segments qui a une part d'ensemble plus grande dans le morceau audio, et
un troisième examen (49c) consistant à constater s'il existe une régularité de la succession de segments dans la troisième classe de segments par rapport aux segments dans la première classe de segments,

le dispositif de désignation de classes de segments (22) étant par ailleurs réalisé de manière à utiliser, sur base d'au moins l'un des examens, la deuxième classe de segments ou la troisième classe de segments comme deuxième classe de segments candidate (50).

13. Dispositif selon la revendication 12, dans lequel le dispositif de désignation de classes de segments (22) est réalisé de manière à utiliser la troisième classe de segments comme deuxième classe de segments candidate (50) lorsqu'il est répondu aux trois examens par "oui", et à utiliser, sinon, la deuxième classe de segments comme deuxième classe de segments candidate.

14. Dispositif selon l'une des revendications précédentes, dans lequel le moyen destiné à mettre à disposition présente les caractéristiques suivantes:

un moyen (10) destiné à mettre à disposition une représentation de similitude pour les segments, la représentation de similitude présentant, pour chaque segment, une pluralité de valeurs de similitude associées, les valeurs de similitude indiquant le degré de similitude entre le segment et chaque autre segment du morceau audio;
un moyen (12) destiné à calculer une valeur de seuil de similitude pour un segment à l'aide de la pluralité de valeurs de similitude associées au segment; et
un moyen (14) destiné à attribuer un segment à une classe de segments lorsque la valeur de similitude du segment remplit une condition prédéterminée en ce qui concerne la valeur de seuil de similitude.

15. Dispositif selon la revendication 14, présentant par ailleurs la caractéristique suivante:

un moyen de sélection de segment (16) destiné à déterminer un segment extrême dont la pluralité de valeurs de similitude associées présentent, ensemble, un extremum,
le moyen (12) destiné à calculer étant réalisé de manière à calculer la valeur de seuil de similitude pour le segment extrême, et
le moyen (14) destiné à attribuer étant réalisé de manière à caractériser la classe de segments par une indication au segment extrême.

16. Dispositif selon la revendication 14 ou 15, dans lequel le moyen (14) destiné à attribuer est réalisé de manière à ne pas associer à la classe de segments un segment qui ne remplit pas la conditions prédéterminée en ce qui concerne la valeur de seuil de similitude, mais à le laisser pour une association à une autre classe de segments, et le moyen (14) destiné à attribuer étant réalisé de manière à ne plus tenir compte, pour un segment associé, de la valeur de similitude du segment lors d'une attribution à une autre classe de segments.

17. Dispositif selon l'une des revendications 14 à 16, dans lequel le moyen (12) destiné à calculer la valeur de seuil de similitude lors d'un passage ultérieur est réalisé de manière à ignorer, après une attribution antérieure à une classe de segments, les valeurs de similitude pour les segments attribués antérieurement dans la pluralité de valeurs de similitude, et

dans lequel le moyen (14) destiné à attribuer est réalisé de manière à effectuer, lors d'un passage ultérieur, une attribution à une autre classe de segments qu'à la classe de segments lors d'un passage antérieur.

18. Procédé pour désigner différentes classes de segments auxquelles sont attribués des segments dans le temps sur base de similitudes de segment, les segments représentant un morceau audio qui est subdivisé en parties principales se présentant de manière répétée dans le morceau audio, aux étapes suivantes consistant à:

mettre à disposition (10, 12, 14) une représentation du morceau audio dans laquelle les segments du morceau audio sont attribués à différentes classes de segments, une classe de segments pouvant chaque fois être associée à une partie principale; et
désigner (22) les classes de segments

en effectuant la sélection de parties principales pour une première classe de segments candidate de premier ordre et pour une deuxième classe de segments candidate de deuxième ordre, le deuxième ordre étant, en ce qui concerne une similitude entre des segments de la deuxième classe de segments candidate et des segments du morceau audio, inférieur au premier ordre,
en vérifiant si la classe de segments candidate de premier ordre présente le segment ultérieur dans le temps dans le signal audio, et
en désignant la classe de segments candidate de premier ordre, lorsqu'elle présente le segment ultérieur dans le temps, comme classe de segments de refrain, et en désignant la classe de segments candidate de deuxième ordre comme classe de segments de strophe (41).

19. Programme d'ordinateur pour réaliser un procédé pour désigner différentes classes de segments selon la revendication 18 lorsque le programme d'ordinateur est exécuté sur un ordinateur.

MUSIKSTÜCKE MIT WIEDERHOLT
AUFTRETENDEN HAUPTTEILEN

EINRICHTUNG ZUM BEREITSTELLEN
EINER ÄHNLICHKEITSDARSTELLUNG — 10

EINRICHTUNG ZUM BERECHNEN
EINES ÄHNLICHKEITSSCHWELL-
WERTS FÜR EIN SEGMENT 12

SEGMENTAUSWAHL-
EINRICHTUNG 16

ADAPTIVER
ÄHNLICHKEITS-
SCHWELLWERT

EINRICHTUNG ZUM ZUWEISEN
EINES SEGMENTS ZU EINER
SEGMENTKLASSE 14

SEGMENTZUWEI-
SUNGSKONFLIKT-
EINRICHTUNG 18

SEGMENT-
KLASSEN

SEGMENTIERUNGS-
KORREKTUR-
EINRICHTUNG 20

SEGMENTKLASSEN-
BEZEICHNUNGS-
EINRICHTUNG 22

FIG. 1

```
┌─────────────────────────────────────┐
│   BESTIMMEN EINES ÄHNLICHKEITSWERTS  │
│         FÜR JEDES SEGMENT            │
│   (SPALTE DER ÄHNLICHKEITSMATRIX)    │
└─────────────────────────────────────┘
                    │
                    ▼
┌─────────────────────────────────────┐
│        SUCHEN DES SEGMENTS MIT       │
│      MAXIMALEN ÄHNLICHKEITSWERT      │
└─────────────────────────────────────┘
                    │
                    ▼
┌─────────────────────────────────────┐
│       BERECHNEN DES ADAPTIVEN        │
│     SCHWELLWERTS FÜR DAS SEGMENT     │
└─────────────────────────────────────┘
                    │
                    ▼
┌ ─ ─ ─ ─ ─ ─ ─ ─ ─ ─ ─ ─ ─ ─ ─ ─ ─ ─ ┐
│     SEGMENTKLASSE INKREMENTIEREN     │
└ ─ ─ ─ ─ ─ ─ ─ ─ ─ ─ ─ ─ ─ ─ ─ ─ ─ ─ ┘
                    │
                    ▼
┌─────────────────────────────────────┐
│      ZUWEISEN DER SEGMENTE ZUR       │
│       SEGMENTKLASSE GEMÄSS           │
│          DEM SCHWELLWERT             │
└─────────────────────────────────────┘
                    │
                    ▼
┌─────────────────────────────────────┐
│    ZU-NULL-SETZEN VON WERTEN NUR     │
│    FÜR DIE ZUGEWIESENEN SEGMENTE     │
└─────────────────────────────────────┘
                    │
                    ▼
┌─────────────────────────────────────┐
│  JA       GIBT ES NOCH NICHT         │
│        ZUGEWIESENE SEGMENTE?         │
└─────────────────────────────────────┘
                    │  NEIN
                    ▼
            ┌───────────────┐
            │     ENDE      │
            └───────────────┘
```

FIG. 2

ZUSAMMENFÜGEN DER AUFEINANDER-
FOLGENDEN SEGMENTE
GLEICHERKLASSE — 30

SEGMENTLÄNGE KLEINER
ALS MINDESTLÄNGE? — 31
NEIN →

JA

TENDENZENÜBERPRÜFUNG — 32 →

KLEINE TENDENZ

WENN VORGÄNGER-S. UND NACHFOLGER-S. AUS GLEICHER KLASSE,
SEGMENT WIRD MIT VORG.-S. + NACHFOLGER-S. VERSCHMOLZEN — 33a

WENN SEGMENT DAS EINZIGE IN EINER KLASSE IST,
VERSCHMELZEN MIT VORGÄNGER-S. — 33b

WENN MEHRERE KURZE SEGMENTE SIND, GEMEINSAM ÜBERPRÜFUNG
AUF V.-S. UND N.-S., UND VERSCHMELZEN MIT V.-S. ODER N.-S. — 33c

FÜR VERBLEIBENDE KURZE SEGMENTE, ÜBERPRÜFEN DER NACHWEIS-
WERTE AN DEN GRENZEN UND ENTSPRECHENDES VERSCHMELZEN — 33d

ALLE ZU KURZEN
SEGMENTE VERSCHMOLZEN

ENDE

FIG. 3

EINBEZIEHEN DER 1. (HÖCHSTEN) SEGMENTKLASSE IN STROPHE-REFRAIN-AUSWAHL ~46

HAT DIE ZWEITE SEGMENTKLASSE NUR EIN SEG., ODER GENAU DAS ERSTE UND DAS LETZTE SEGMENT? 47

JA → 2. S.-KL. AUS AUSWAHL RAUS. 48a

FÜR DIE NOCH VERBLEIBENDE HÖCHSTE SEGMENT-KLASSE, UNTERSUCHEN DER BRIDGE-PROBLEMATIK ~48b

HAT JEDES SEGMENT EINE MINDESTLÄNGE? 49a JA

WELCHE S.-KL. (2. ODER 3.) HAT DEN GRÖSSTEN GESAMTANTEIL? 49b JA

REGELMÄSSIGKEIT DER ABFOLGE VON 3. S.-KL. ZU DER 1. S.-KL.? 49c JA

3. S.-KL. KOMMT IN AUSWAHL, SONST, 2. S.-KL. KOMMT IN AUSWAHL ~50

FIG. 4a

WELCHE SEGMENTKLASSE IN DER AUSWAHL HAT DAS LETZTE SEGMENT IM MUSIKSTÜCK — 40

2. SEGMENT-KLASSE

1. SEGMENT-KLASSE

1. SEGMENTKLASSE IST REFRAIN — 41

2. SEGMENTKLASSE HAT 1. SEGMENT IM MUSIKSTÜCK? — 42

JA

NEIN

1. SEGMENTKLASSE IST REFRAIN — 44

2. SEGMENTKLASSE IST STROPHE

2. SEGMENTKLASSE IST DER REFRAIN — 43

1. SEGMENTKLASSE IST DIE STROPHE

BEZEICHNEN DER RESTLICHEN SEGMENTKLASSEN — 45

FIG. 4b

FIG. 5

KERNEL $K = \begin{bmatrix} 1 & -1 \\ -1 & 1 \end{bmatrix}$

FIG. 6

FIG. 7

S(i,j)

1. SEGMENTKLASSE: 7, 4, 1
2. SEGMENTKLASSE: 5, 6
3. SEGMENTKLASSE: 10
4. SEGMENTKLASSE: 2, 3

FIG. 8

FIG. 9

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Nicht-Patentliteratur**

- **FOOTE, J.T. ; COOPER, M.L.** Summarizing Popular Music via Structural Similarity Analysis. *Proceedings of the IEEE Workshop of Signal Processing to Audio and Acoustics,* 2003
- **FOOTE, J.T. ; COOPER, M.L.** *Proceedings of SPIE Storage and Retrieval for Multimedia Databases,* Januar 2003, vol. 5021, 167-75
- **CHU, S. ; LOGAN B.** Music Summary using Key Phrases. *Technical Report,* 2000
- **BARTSCH, M.A. ; WAKEFIELD, G. H.** To Catch a Chorus: Using Chroma-Based Representation for Audio Thumbnailing. *Proceedings of the IEEE Workshop of Signal Processing to Audio and Acoustics,* 2001